# EUROPEAN PATENT SPECIFICATION

(11) **EP 4 738 542 B1**
(45) Date of publication and mention of the grant of the patent: **15.07.2026**
(21) Application number: 25160138.1
(22) Date of filing: 26.02.2025
(51) Int. Cl.: H01M 10/6551, H01M 10/613, H01M 10/6554, H01M 50/213, H01M 50/247, H01M 50/273, H01M 50/367, H01M 50/383, H01M 50/503

(54) **BATTERY PACK**
BATTERIEPACK
BLOC-BATTERIE

(30) Priority: 30.10.2024 CN 202411539639; 30.10.2024 CN 202411533913; 30.10.2024 CN 202411534283
(43) Date of publication of application: 06.05.2026
(73) Proprietor: Nanjing Chervon Industry Co., Ltd., Nanjing, Jiangsu 211106 (CN)
(72) Inventor: LI, Weibo, Nanjing (CN); ZHANG, Yuexiang, Nanjing (CN); YANG, Bin, Nanjing (CN)
(74) Representative: Sun, Yiming

(56) References cited:
- WO-A1-2019/065110
- US-A1- 2012 164 490

## Description

### TECHNICAL FIELD

The present invention relates to the technical field of power tools, for example, a battery pack.

### BACKGROUND

Having gone through the evolution of power supply from manual operation to fuel supply, most of the tools currently widely used in various scenarios such as gardening and construction rely on lithium batteries for energy supply. In lithium battery technologies, safety is a key point. This encompasses safety at the micro level, which may be related to the positive and negative electrode materials of the plurality of cells, as well as safety at the macro level, involving waterproofing, insulation, heat dissipation, fire prevention, extrusion resistance, fall prevention, and the like. To improve the overall performance of the battery pack and enhance the adaptability of the battery pack for power tools to harsh working conditions, it is necessary to consider the preceding multiple factors comprehensively.

US2012164490A1 discloses the case housing a plurality of cells divided, by a circuit board provided at the same sides of the cells, into a housing space housing the cells and an exhaust duct for releasing a gas from the vents 8a of the cells to outside the case. The vents 8a of the cells communicate with the exhaust duct through openings 30a formed in the flat plate. The exhaust duct is divided into a first space and a second space by a partition provided between the flat plate and an external plate of the case. The first space communicates with the second space through holes 40a formed in the partition.

WO2019065110A1 discloses a power supply device provided with a battery assembly in which a pair of battery units are arranged in positions opposing an insulating space, with discharge openings of discharge valves included in battery cells in the battery units arranged in the insulating space. The battery assembly is in close contact with a potting resin. A closing cover made of a foam of an insulating material having closed pores that can be melted by ejected gas from the battery cells is arranged in the insulating space. The closing cover blocks flow of the potting resin into discharge valve opening portions.

This part provides background information related to the present invention, and the background information is not necessarily the existing art.

### SUMMARY

An object of the present invention is to solve or at least alleviate part or all of the preceding problems. Therefore, the present invention provides a battery pack. To achieve the preceding object, the present invention is set out in the appended claims.

### BRIEF DESCRIPTION OF DRAWINGS

FIG. 1 is a schematic view illustrating a scenario in which a battery pack supplies power to power tools in the present invention.
FIG. 2 is a perspective view of a battery pack as an example of the present invention from one perspective.
FIG. 3 is a perspective view of the battery pack in FIG. 2 from another perspective.
FIG. 4 is a perspective view of cell modules accommodated in a housing of the battery pack shown in FIG. 2.
FIG. 5 is an exploded view of some internal structures of the battery pack shown in FIG. 2 with a housing removed.
FIG. 6 is a perspective view of a bracket, separators, electrodes of cells, and connection pieces in a battery pack as an example of the present invention.
FIG. 7 is a plan view of an end cover and a first metal plate in a battery pack as an example of the present invention.
FIG. 8 is a sectional view of the battery pack shown in FIG. 2.
FIG. 9 is a schematic view illustrating the shortest distance between a first-type electrode and the end cover, the shortest distance between a second-type electrode and the end cover, the thickness of the portion on an end cover corresponding to the position of the first-type electrode, and the thickness of the portion on the end cover corresponding to the position of the second-type electrode in the sectional view of the battery pack shown in FIG. 8.
FIG. 10 is a perspective view of a connection piece in a battery pack as an example of the present invention.
FIG. 11 is a schematic view illustrating the thickness of a first-layer component and the thickness of a second-layer component in the connection piece shown in FIG. 10.
FIG. 12 is a plan view of electrode connecting portions and openings in the connection piece shown in FIG. 10.
FIG. 13 is a schematic diagram illustrating the length occupied solely by a first-layer component and the length occupied by a second-layer component along the direction of current in a connection piece.
FIG. 14 is a perspective view of a connection piece in a battery pack as another example of the present invention.
FIG. 15 is a perspective view of a first-layer component and a second-layer component formed by folding the connection piece shown in FIG. 14.
FIG. 16 is a perspective view of a connection piece in a battery pack as another example of the present invention.
FIG. 17 is another sectional view of the battery pack shown in FIG. 2.
FIG. 18 is a schematic view of a first metal plate, a second metal plate, and an exhaust channel therebetween in the sectional view of the battery pack shown in FIG. 17.
FIG. 19 is a schematic view of a third metal plate, a fourth metal plate, a fifth metal plate, an exhaust channel between the third metal plate and the fourth metal plate, and an exhaust channel between the fourth metal plate and the fifth metal plate in the sectional view of the battery pack shown in FIG. 17.
FIG. 20 is a schematic view of a fuse, a thermal insulation device, and cells in a battery pack as an example of the present invention.
FIG. 21 is a partial view of the thermal insulation device in the battery pack shown in FIG. 20 mounted onto an interface board assembly and a bracket.
FIG. 22 is a plan view of cell modules, a flexible circuit board, and a bracket in a battery pack as an example of the present invention.
FIG. 23 is a plan view of a main circuit portion, branch circuit portions, a conductive layer, a substrate, and positioning holes of the flexible circuit board in the battery pack shown in FIG. 22.
FIG. 24 is a partial view of a positioning column on the bracket, a pad through hole of a conductive layer in the flexible circuit board, and a connection piece mounting portion in the battery pack shown in FIG. 22.
FIG. 25 is a perspective view of the cell modules, the flexible circuit board, the bracket, and connection pieces in the battery pack shown in FIG. 22.
FIG. 26 is a table illustrating the electrical conductivity and thermal conductivity of some types of materials.
FIG. 27 is a table illustrating the electrical conductivity and thermal conductivity of a copper-nickel composite material at the same thickness and different ratios.
FIG. 28 is a flowchart of a method for assembling a cell module as an example of the present invention.

### Reference list

- 100: battery pack
- 100a: cell module
- 200: power tool
- 200a: riding mower

- 200b: electric drill
- 200c: chainsaw
- 200d: hedge trimmer
- 200e: blower
- 200f: all-terrain vehicle
- 10: housing
- 11: airflow outlet
- 12: terminal assembly
- 13: fireproof part
- 20: cell
- 21: electrode
- 21a: first-type electrode
- 21b: second-type electrode
- 22: cell body
- 30: bracket
- 30a: upper bracket
- 30b: lower bracket
- 30c: sleeve
- 31: opening (on the end surface of the bracket)
- 32: concave and convex positioning shoulders (bracket)
- 33: positioning column
- 40: end cover
- 41: sunken boss
- 42: thin-wall feature
- 43: concave and convex positioning shoulders (end cover)

- 44: fastener (between the end cover and the bracket)
- 50: separator
- 51: regions divided by the separators
- 61: first metal plate
- 62: second metal plate
- 63/63a/63b/63: cexhaust channel
- 64: third metal plate
- 65: fourth metal plate
- 66: fifth metal plate
- 67: fastener (between the metal plate and the end cover)
- 70: connection piece
- 71: first-layer component
- 71a: first surface
- 71b: second surface
- 72: second-layer component
- 72a: overlapping portion
- 73: opening (connection piece)
- 74: electrode connecting portion
- 75: mounting portion
- 80: thermal insulation device
- 81: thermal insulator
- 82: fuse
- 83: interface board assembly
- 90: flexible circuit board/flexible die-cut circuit (FDC) board
- 90a: main circuit portion

- 90b: branch circuit portion
- 91: conductive layer
- 91a: pad through hole
- 92: substrate
- 93: positioning hole
- d1: the shortest distance between the first-type electrodes and the end cover
- d2: the shortest distance between the second-type electrodes and the end cover
- d3: the thickness of the portion on the end cover corresponding to the position of the first-type electrode
- d4: the thickness of the portion on the end cover corresponding to the position of the second-type electrode
- d5: the thickness of the first-layer component
- d6: the thickness of the second-layer component
- d7: the shortest distance between the edge of the conductive layer and the edge of the substrate or the edge of the positioning hole

### DETAILED DESCRIPTION

With the development of lithium battery technologies, lithium batteries have been widely used in various industries. A major focus in the design process is safety. Besides safety at the cell level, it further encompasses safety at the battery pack level. In other words, in addition to improving the safety performance of the plurality of cells from aspects such as positive and negative electrode materials, more importantly, the fire and explosion resistance, heat dissipation and temperature uniformity, and insulation and waterproofing of the entire battery pack should be considered. The battery pack and related solutions proposed in the present invention are described in detail below in conjunction with examples and drawings.

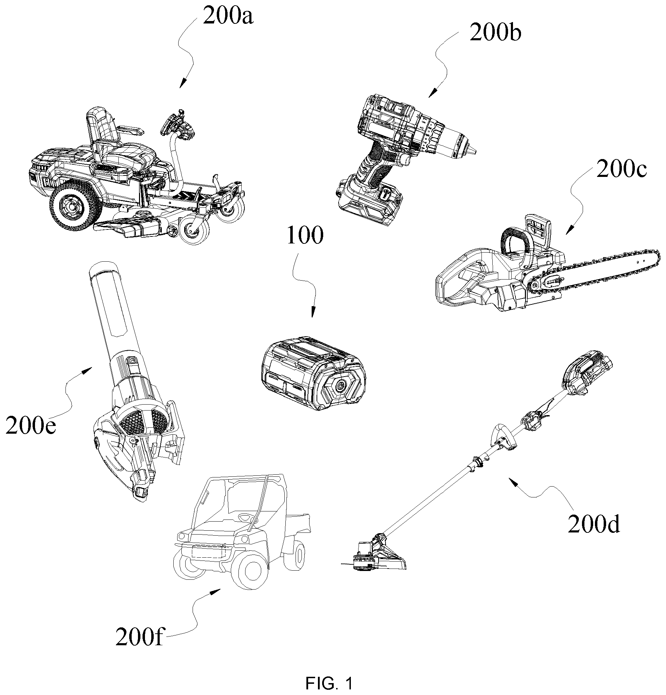

The present invention mainly provides a battery pack 100. The battery pack 100 is a battery pack for a power tool and can be detachably connected to a power tool 200 to supply power to the power tool 200. The relevant design needs to adapt to various working conditions of the power tool 200. Referring to FIG. 1, power tools 200 powered by the battery pack 100 of the present invention may be of various different types, including, but not limited to, a riding mower 200a, an electric drill 200b, a chainsaw 200c, a string trimmer 200d, a blower 200e, and an all-terrain vehicle 200f shown in FIG. 1. In some examples, the power tool 200 powered by the battery pack 100 of the present invention may include a handheld power tool, including a hedge trimmer, an electric circular saw, or the like. In some examples, the power tool 200 powered by the battery pack 100 of the present invention may include a table tool, including a miter saw, a metal cutter, or the like. In some examples, the power tool 200 powered by the battery pack 100 of the present invention may include a push tool or a riding tool, including a push mower, a push snow thrower, a riding mower, a stand-on mower, or the like. In some examples, the power tool 200 powered by the battery pack 100 of the present invention may include an outdoor wheeled tool, including an outdoor electric vehicle such as a farmer's vehicle or a golf cart. In some examples, the power tool 200 powered by the battery pack 100 of the present invention may include a robotic tool, including a robotic mower, a robotic snow thrower, or the like. Alternatively, in some examples, the power tool 200 may be a garden tool, such as a hedge trimmer, a blower, a mower, or a string trimmer. In some examples, the power tool 200 may be a decorating tool, including a screwdriver, a nail gun, a glue gun, a sander, an electric circular saw, or the like. In some examples, the power tool 200 may be a cleaning tool, including a blower, a snow thrower, a cleaning machine, or the like. Alternatively, in some examples, the power tool 200 may be a cutting tool, including a reciprocating saw, a jigsaw, an electric circular saw, a chainsaw, or the like. In some examples, the power tool 200 may be a fastening tool, including an electric drill, a screwdriver, an electric hammer, or the like. In some examples, the power tool 200 may be a sanding tool, including an angle grinder, a sander, or the like. In some examples, the power tool 200 may be another tool, such as an electric lamp, a fan, or the like. It is to be understood that, under the premise that the characteristics are not contradictory, more types of power tools 200 that are powered by the battery pack 100 of the present invention and have not been shown above may exist. The power tool 200 generally has a battery mounting portion to which the battery pack 100 can be detachably connected. The specific positions and structures of the battery mounting portions of different power tools 200 may be different, and the arrangements of structures in different power tools 200 are also different. The riding mower is used as an example. The riding mower generally has a frame, a traveling assembly including at least traveling wheels and a traveling motor, and a cutting assembly including at least a blade and a cutting motor. The battery mounting portion is generally located at the front or rear of the frame. The details are not repeated here.

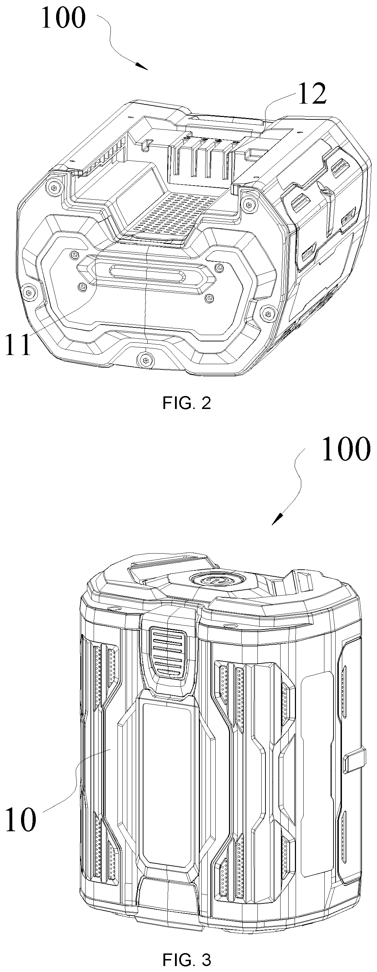

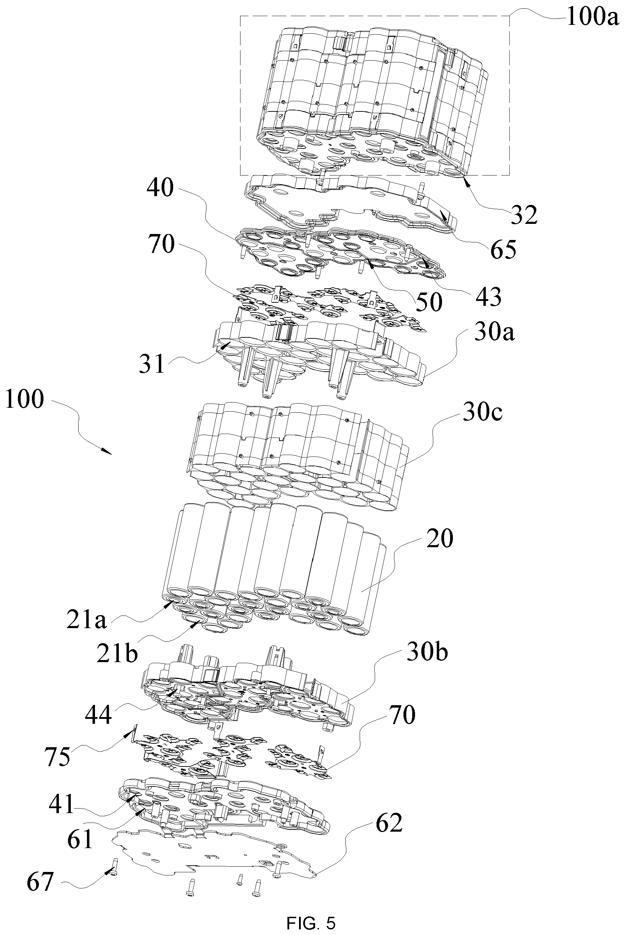

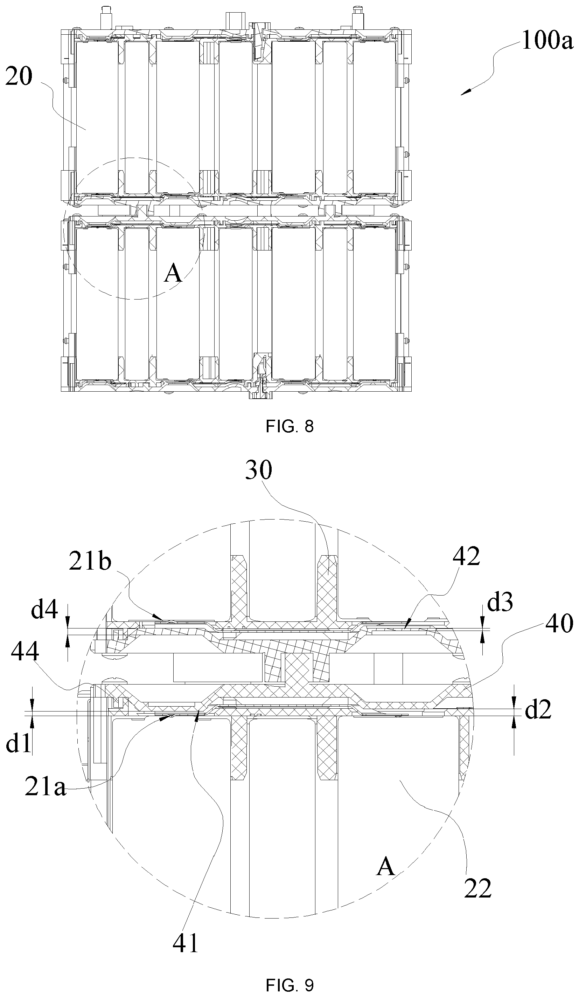

Referring to FIGS. 2 to 9, the battery pack 100 includes a housing 10 and multiple cells 20. The cell 20 is a component for storing electrical energy in the battery pack 100, and each cell 20 has a positive electrode 21 and a negative electrode 21. In some examples, the cell 20 may be a cylindrical battery, a square battery, or a pouch battery. In some examples, the cell 20 may be a single-tab battery, a dual-tab battery, a multi-tab battery, or a full-tab battery. In some examples, the cell 20 may be a lithium iron phosphate cell or a ternary lithium cell. In some examples, the cell 20 may be a sodium-ion cell. In some examples, the characteristics of the multiple cells 20 in the battery pack 100 may be different or partially different. The specific number of the plurality of cells 20 in the battery pack 100 may be adjusted within a certain range. The multiple cells 20 may form one or more cell modules 100a. The plurality of cells 20 in the same cell module 100a are electrically connected in series, in parallel, or in series and in parallel. Different cell modules 100a are electrically connected in series or in parallel. Finally, the total positive electrode and the total negative electrode of the battery pack 100 can be formed, that is, the total positive terminal and the total negative terminal of the battery pack 100 for supplying power to the outside are formed and belong to a terminal assembly of the battery pack 100.

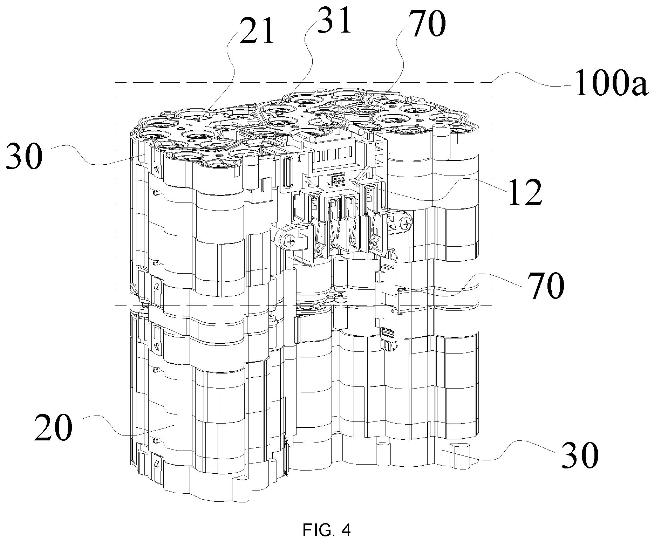

An accommodation space is formed inside the housing 10, the multiple cells 20 or the one or more cell modules 100a are accommodated in the accommodation space of the housing 10, and a bracket 30 for supporting the plurality of cells 20 is generally provided in the accommodation space. In an optional example of the present invention, as shown in FIGS. 4 to 9, the bracket 30 for supporting the plurality of cells 20 has end surfaces corresponding to the positions of the electrodes 21 of the plurality of cells 20, and the end surface has openings 31 capable of exposing the electrodes 21 of the plurality of cells 20. In some examples, the openings 31 on the end surface of the bracket 30 are in one-to-one correspondence with the electrodes 21 of the plurality of cells 20, that is, one opening 31 on the end surface of the bracket 30 exposes the electrode 21 of one cell 20. In some other examples, the openings 31 on the end surface of the bracket 30 are in one-to-many correspondence with the electrodes 21 of the plurality of cells 20, that is, one opening 31 on the end surface of the bracket 30 exposes the electrodes 21 of multiple cells 20. At the same time, in this example, end covers 40 are further provided in the accommodation space of the housing 10, and the end cover 40 is mounted onto the end surface of the bracket 30. The positional relationship between the plurality of cells 20, the bracket 30, and the end cover 40 is that the multiple cells 20 are located on a side of the end surface of the bracket 30, and the end cover 40 is mounted on the other side of the end surface of the bracket 30. Through the openings 31 on the end surface of the bracket 30, paths or spaces for the sealant to flow exist between the electrodes 21 of the plurality of cells 20 and the end cover 40.

In addition, in this example, separators 50 are formed on any one of the end cover 40 and the end surface of the bracket 30, or separators 50 are formed on both the end cover 40 and the end surface of the bracket 30. The sealant is filled between the end cover 40 and the end surface of the bracket 30 and separated into several regions 51 divided by the separators 50, and the separated sealant covers the electrodes 21 of the plurality of cells 20 in the several regions 51 region by region. Specifically, the inner wall of the end cover 40 faces the outer wall of the end surface of the bracket 30. The separators 50 are formed on the inner wall of the end cover 40 or the outer wall of the end surface of the bracket 30, or the separators 50 are formed on both the inner wall of the end cover 40 and the outer wall of the end surface of the bracket 30. Usually, the separators 50 are integrated with the end cover 40 or the bracket 30. In some examples, the separators 50 are separator ribs formed on the end cover 40 or the end surface of the bracket 30. In some examples, the separators 50 include separator ribs that are disposed on the outer edge of the end cover 40 or the end surface of the bracket 30 and can surround the common periphery of the several regions 51 and limit the outermost periphery covered by the sealant.

The plurality of cells 20 are located in the openings 31 on the end surface of the bracket 30, and the openings 31 on the end surface of the bracket 30 penetrate the end surface of the bracket 30 and correspond to the positions of the electrodes 21 of the plurality of cells 20. The separators 50 can divide and separate the openings 31, that is, the separators 50 can divide and separate the electrodes 21 of the plurality of cells 20 exposed by the openings 31 or corresponding to the positions of the openings 31. In some examples, the openings 31 on the end surface of the bracket 30 are in one-to-one correspondence with the electrodes 21 of the plurality of cells 20; when the end surface of the bracket 30 is observed, the separators 50 may divide multiple openings 31 or the electrodes 21 of the multiple cells 20 into the same region 51. In some other examples, the openings 31 on the end surface of the bracket 30 are in one-to-many correspondence with the electrodes 21 of the plurality of cells 20; when the end surface of the bracket 30 is observed, the separators 50 may divide one opening 31 or the electrodes 21 of the multiple cells 20 exposed by the opening 31 into the same region 51. The openings 31 penetrating the end surface of the bracket 30 form paths or spaces for the sealant to flow between the inner wall of the end cover 40 and the electrodes 21 of the plurality of cells 20. The separators 50 are provided so that the flow paths or spaces of the sealant are separated from each other and are not completely interconnected. Based on this, the sealant is filled between the inner wall of the end cover 40 and the end surface of the bracket 30. The sealant is separated and restricted in the regions 51 due to the separators 50. The sealant in different regions 51 do not connect with each other. Under the restriction of the separator 50, the sealant in the region 51 covers the electrodes 21 of one or more cells 20 in this region 51 through the openings 31 on the end surface of the bracket 30 in this region 51.

In this example, the end cover 40 mates with the bracket 30 to divide the electrodes 21 of the multiple cells 20 into different regions 51 and separate the sealant in different regions 51. The electrodes 21 of the plurality of cells 20 in the region 51 are covered by the sealant in this region 51. In this manner, the creepage distance between the plurality of cells 20 in different regions 51 and between the positive and negative electrodes of the cell 20 is increased, and the waterproof capability of the battery pack 100 is enhanced. The cell 20 further includes a cell body 22 in addition to the electrodes 21. A cylindrical battery is used as an example. The positive and negative electrodes 21 are located at two ends of the cell 20 along the axial direction, and most of the part between the two ends of the cell 20 is the cell body 22. In this example, the electrodes 21 of the cell 20 are covered by the sealant, while at least part of the cell body 22 is not covered by the sealant, thereby reducing the amount of the used sealant and not affecting the heat dissipation of the cell 20.

In some examples, the division of the regions 51 by the separators 50 is performed based on the electrical connection relationship between the plurality of cells 20. The electrodes 21 of the multiple cells 20 that have an electrical connection relationship may be divided into the same region 51, and the electrodes 21 of the plurality of cells 20 that do not have an electrical connection relationship are located in different regions 51, thereby reasonably increasing the creepage distance between the plurality of cells 20 and improving the waterproof performance of the battery pack 100. In some examples, the electrodes 21 of the multiple cells 20 in the same region 51 are electrically connected through a connection piece 70. Specifically, the series and parallel connection between the plurality of cells 20 in the battery pack 100 may be achieved through connection pieces 70. The case where the positive and negative electrodes 21 of the cylindrical battery are located on two ends along the axial direction, respectively is used as an example. The bracket 30 and the end cover 40 may be arranged along the axial direction of the plurality of cells 20. The multiple cells 20 in the battery pack 100 are connected in parallel, and the positive electrodes 21 of the multiple cells 20 connected in parallel are exposed through the opening(s) 31 on the end surface of the bracket 30 and are electrically connected to the same connection piece 70. The separators 50 on the end cover 40 and/or the separators 70 on the end surface of the bracket 30 may enclose the positive electrodes 21 of the multiple cells 20 connected in parallel into the same region 51 and then coat the region 51 with the sealant.

In some examples, the electrodes 21 of multiple electrically connected cells 20 are exposed through the same opening 31, and the connection piece 70 may connect the electrodes 21 of the multiple cells 20 in the opening 31 of the bracket 30. In some other examples, the electrodes 21 of multiple electrically connected cells 20 are exposed through different openings 31, respectively, and the connection piece 70 may connect the electrodes 21 of the multiple cells 20 through multiple openings 31 of the bracket 30. In addition, the bracket 30 may fix the connection pieces 70. The connection pieces 70 may be fixed to the bracket 30 via bolts, screws, or the like to maintain stability.

In some examples, the separator 50 on the end cover 40 and/or the separator 50 on the bracket 30 are arranged around the outer periphery of the connection piece 70 so that when the electrodes 21 of the plurality of cells 20 that have an electrical connection relationship are divided into the same region 51, the unnecessary glue coating area can be reduced.

In some examples, the sealant filled between the end cover 40 and the end surface of the bracket 30 is a sealing material whose shape can change with the sealing surface and has a certain adhesiveness. The fluidity of the sealant is not strong. In this example, the sealant may seal the electrodes 21 of the plurality of cells 20 after compressed by the end cover 40. The sealant may include one or more of one-component silicone, the two-component potting compound, and the expandable adhesive/foam sealant. It is to be understood that the path and space for the expansion of the glue may be pre-designed.

In some examples, the sealant applied in the battery pack 100 should have good thermal conductivity to avoid adverse effects on the heat dissipation of the battery pack 100. Specifically, the thermal conductivity of the applied sealant may be greater than or equal to 0.3 W/(m·K). Preferably, the thermal conductivity of the sealant may be greater than or equal to 0.4 W/(m·K). In some examples, the thermal conductivity of the sealant is about 0.5 W/(m·K).

In some examples, the end cover 40 may include a flame retardant material to improve the fire and explosion resistance of the battery pack 100. In some examples, the end cover 40 is a two-in-one component of a plastic part and a metal plate as described below.

In some examples, to fully ensure the waterproof capability of the battery pack 100, a sealed connection may be achieved between the end cover 40 and the end surface of the bracket 30, that is, no water seepage gap is left at the part where the end cover 40 and the end surface of the bracket 30 are mounted. In some examples, the end cover 40 and the end surface of the bracket 30 are coupled by concave and convex positioning shoulders 32 and 43, which may be single-step positioning shoulders or double-step positioning shoulders. In some examples, the separators 50 may also be implemented in the form of concave and convex positioning shoulders. In addition, the assembly of the bracket 30 may also be achieved by coupling via concave and convex positioning shoulders to prevent water from infiltrating or seeping into the plurality of cells 20 supported in the bracket 30. For example, the bracket 30 is formed by assembling multiple components (an upper bracket 30a, a sleeve 30c, and a lower bracket 30b) along the axial direction of the plurality of cells 20, and the multiple components are coupled and sealed with each other by concave and convex positioning shoulders.

In some other examples, the concave and convex positioning shoulders on the end cover 40 and the end surface of the bracket 30 are further provided with sealing materials such as soft rubber to further enhance the waterproof performance. The soft rubber may be sleeved on the convex positioning shoulder or embedded into the concave positioning shoulder. Specifically, the concave and convex positioning shoulders may be provided on the outer edge of the area covered by the end cover 40 after installation (a groove may be provided on the end surface of the bracket 30, and a rib may be provided on the end cover 40) and coated with soft rubber, thereby mating with the sealant filled between the end cover 40 and the end surface of the bracket 30 to ultimately form a good sealing environment.

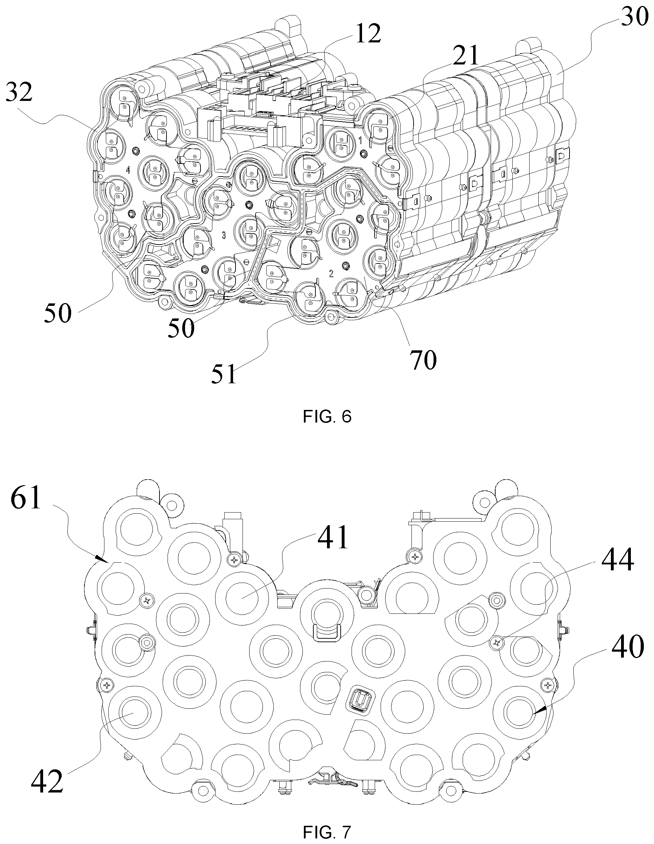

In another optional example of the present invention, as shown in FIGS. 7 to 9, similar to the above, the bracket 30 supporting the plurality of cells 20 in the housing 10 has end surfaces corresponding to the positions of the electrodes 21 of the plurality of cells 20, and the end surface has openings 31 capable of exposing the electrodes 21 of the plurality of cells 20. Moreover, the end cover 40 mounted onto the end surface of the bracket 30 is further provided in the housing 10, and the sealant is filled between the end cover 40 and the end surface of the bracket 30 and can cover the electrodes 21 of the multiple cells 20. In this example, the electrodes 21 of the multiple cells 20 covered by the sealant may include first-type electrodes 21a and second-type electrodes 21b, and the shortest distance d1 between the first-type electrodes 21a and the end cover 40 is less than the shortest distance d2 between the second-type electrodes 21b and the end cover 40. In this example, the thickness of the sealant covering the electrodes 21 of some cells 20 is reduced so that when thermal runaway occurs in the battery pack 100, breakthrough points through which airflow and flames can be discharged exist, thereby avoiding a more severe explosion. It is to be understood that due to the differences in the structure of the positive and negative electrodes 21 of the cell 20 and the packaging process, the thickness of the sealant covering the positive electrode 21 of the cell 20 may be different from the thickness of the sealant covering the negative electrode 21 of the cell 20. However, in this example, the multiple cells 20 supported by the end surface of the same bracket 30 have the same height in the axial direction. A cylindrical lithium battery in which the positive and negative electrodes 21 are located at two ends along the axial direction, respectively and the positive electrode 21 protrudes more than the negative electrode 21 is used as an example. For the cell 20 exposed through the opening 31 on the end surface of the bracket 30, the distance from the highest point of the positive electrode 21 of the cell 20 along the axial direction to a plane perpendicular to the central axis of the cell 20 is the same as the distance from the lowest point of the negative electrode 21 of the cell 20 along the axial direction to the plane. Therefore, those skilled in the art should be able to understand the differences between this example and the conventional situation.

Thermal runaway is a chain reaction within a battery cell that can be very difficult to stop once it has started. It occurs when the temperature inside a battery reaches the point that causes a chemical reaction to occur inside the battery. This chemical reaction produces even more heat, which drives the temperature higher, causing further chemical reactions that create more heat. In thermal runaway, the battery cell temperature rises incredibly fast (milliseconds). The energy stored in that battery is released very suddenly. This chain reaction creates extremely high temperatures (around 752 degrees Fahrenheit / 400 degrees Celsius). These temperatures can cause gassing of the battery and a fire that is so hot it can be nearly impossible to extinguish.

It should be noted that the solutions in this invention are not limited to be used in the situation of thermal runaway, could also be used in other situations when the electrodes ejects or releases the airflow.

In some examples, to adapt to the structure of the cell 20 and facilitate airflow and flame discharge and pressure relief, the first-type electrode 21a corresponding to the part where the thickness of the sealant is reduced is the positive electrode 21 of the cell 20, and the second-type electrode 21b is the negative electrode 21 of the cell 20. The electrodes 21 of the multiple cells 20 corresponding to the same end surface include the first-type electrodes 21a and the second-type electrodes 21b, that is, the electrodes 21 of the plurality of cells 20 exposed by the openings 31 on the end surface of the same bracket 30 include the positive electrodes 21 and the negative electrodes 21. In this case, at least some of the plurality of cells 20 are connected in series. In some other examples, a cylindrical battery in which the positive and negative electrodes 21 are located at two ends of the cell 20 along the axial direction, respectively is used as an example. If the electrodes 21 of the plurality of cells 20 exposed by the openings 31 on the end surface of the bracket 30 are all positive electrodes 21 or all negative electrodes 21, then the electrodes 21 of the plurality of cells 20 covered by the sealant filled between the bracket 30 and the end cover 40 on a side are the first-type electrodes 21a, that is, the positive electrodes 21 of the plurality of cells 20, the electrodes 21 of the plurality of cells 20 covered by the sealant filled between the bracket 30 and the end cover 40 on the other side are the second-type electrodes 21b, that is, the negative electrodes 21 of the plurality of cells 20, the shortest distance between the positive electrodes 21 and the end cover 40 is inconsistent with the shortest distance between the negative electrodes 21 and the end cover 40, and the shortest distance between the positive electrodes 21 and the end cover 40 on the corresponding side is smaller, which is in line with the concept of this example.

In some examples, the method for reducing the shortest distance between the first-type electrodes 21a and the end cover 40, that is, the method for reducing the thickness of the sealant covering the electrodes 21 of some cells 20 is providing depressions at portions on the end cover 40 corresponding to the positions of the first-type electrodes 21a, or setting the depth of the depression at a portion on the end cover 40 corresponding to the position of the first-type electrode 21a to be greater than the depth of the depression at a portion on the end cover 40 corresponding to the position of the second-type electrode 21b. Specifically, a sunken boss 41 may be formed at a portion of the end cover 40 facing the first-type electrode 21a so that the end cover 40 is closer to the first-type electrode 21a. Alternatively, a sunken boss 41 may be formed at a portion of the end cover 40 facing the first-type electrode 21a, a sunken boss 41 may be formed at a portion of the end cover 40 facing the second-type electrode 21b, and the sunken boss 41 at the portion corresponding to the first-type electrode 21a sinks deeper toward the electrode, thereby reducing the distance between the end cover 40 and the electrode.

In some examples, in addition to reducing the thickness of the sealant covering the electrodes 21 to achieve pressure relief and explosion protection, the material thickness of the portion on the end cover 40 corresponding to the position of the first-type electrode 21a may be reduced so that the thickness d3 of the portion on the end cover 40 corresponding to the position of the first-type electrode 21a is less than the thickness d4 of the portion on the end cover 40 corresponding to the position of the second-type electrode 21b. Specifically, further, a central local region 42 of the sunken boss 41 of the end cover 40 may have a thin-wall feature to reduce the thickness of the end cover 40 at this position. The central local region 42 may be substantially aligned with the position of an explosion-proof valve along the axial direction to facilitate airflow and flame discharge and pressure relief during thermal runaway.

In some examples, the end cover 40 may be fixedly mounted onto the end surface of the bracket 30 by fasteners. Specifically, the end cover 40 may be fixedly mounted onto the end surface of the bracket 30 via bolts and nuts. The fixation of the end cover 40 can ensure that the shortest distance between the first-type electrodes 21a and the end cover 40 and the shortest distance between the second-type electrodes 21b and the end cover 40 are in line with the expectations so that airflow and flames can be discharged and pressure relief can be achieved during thermal runaway. Moreover, it can be ensured that the sealant covers the electrodes 21 of the plurality of cells 20 region by region in the case where the separators 50 are provided on the end cover 40 and/or the bracket 30, thereby increasing the creepage distance and improving the waterproof performance. Based on the above, the electrodes 21 of the multiple cells 20 that have an electrical connection relationship are divided into the same region 51 through the separator 50, and the electrodes 21 of the plurality of cells 20 in different regions 51 do not have an electrical connection relationship. The same divided region 51 may include both the first-type electrodes 21a and the second-type electrodes 21b, or the same divided region 51 may include only the first-type electrodes 21a or the second-type electrodes 21b.

In some examples, the design in which the end cover 40 and the sealant are used may be performed next to the electrodes 21 of the plurality of cells 20 on at least one side, or the bracket 30 with the openings 31 on the end surface exposing the electrodes 21 and the end cover 40 mounted onto the end surface of the bracket 30 may be provided on each side of the plurality of cells 20, and the sealant is filled between the end surface of the bracket 30 and the end cover 40. Further, the separators 50 are formed on at least one of the end surface of the bracket 30 and the end cover 40, and/or the shortest distance between the first-type electrodes 21a and the end cover 40 is not equal to the shortest distance between the second-type electrodes 21b and the end cover 40.

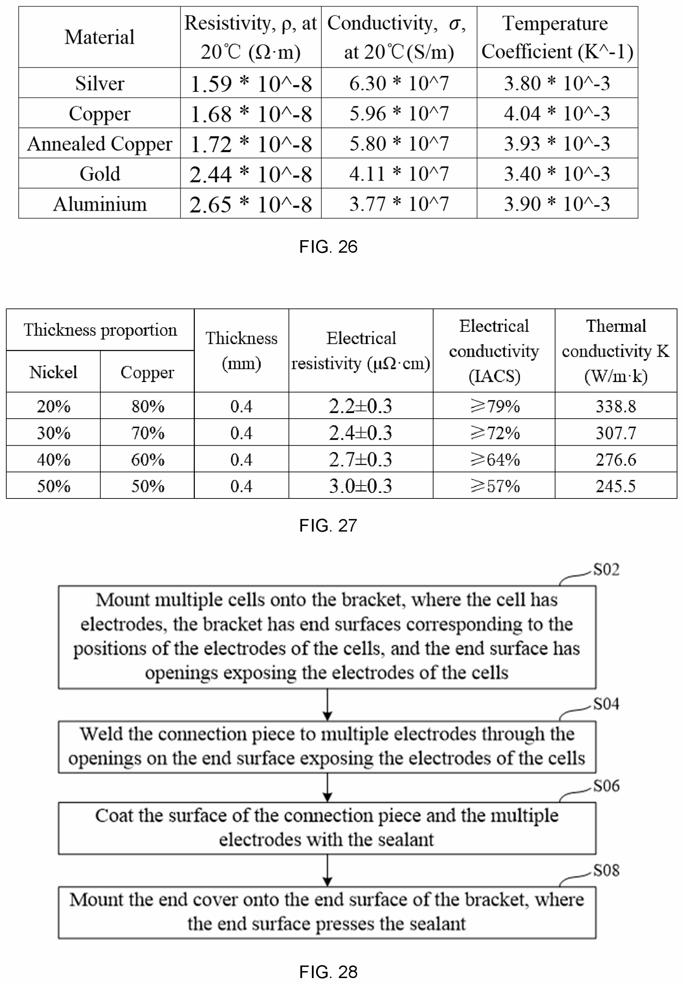

Based on the above, the present disclosure further provides a method for assembling the cell module 100a, which is used for implementing the assembly of the cell module 100a in the battery pack 100 described above. As shown in FIG. 28, the method may include the specific steps below.

In S02, multiple cells 20 are mounted onto the bracket 30, where the cell 20 has electrodes 21, the bracket 30 has end surfaces corresponding to the positions of the electrodes 21 of the plurality of cells 20, and the end surface has openings 31 exposing the electrodes 21 of the plurality of cells 20.

In S04, the connection piece 70 is welded to multiple electrodes 21 through the openings 31 on the end surface exposing the electrodes 21 of the plurality of cells 20.

In S06, the surface of the connection piece 70 and the multiple electrodes 21 are coated with the sealant.

In S08, the end cover 40 is mounted onto the end surface of the bracket 30, where the end surface presses the sealant.

Specifically, based on the above, the bracket 30 of the battery pack 100 has end surfaces corresponding to the positions of the electrodes 21 of the plurality of cells 20, and the openings 31 capable of exposing the electrodes 21 of the plurality of cells 20 are disposed on the end surfaces. When the cell module 100a is assembled, first, multiple cells 20 need to be mounted onto the bracket 30; after the plurality of cells 20 are mounted, the electrodes 21 of the plurality of cells 20 can be exposed through the openings 31 on the end surfaces of the bracket 30. The multiple cells 20 mounted together form the cell module 100a in the battery pack 100; alternatively, the battery pack 100 may include more than one cell module 100a, such as two cell modules 100a, and the multiple cell modules 100a may be assembled separately. In some examples, the bracket 30 may have a limiting structure for limiting the positions of the supported cells 20, or the openings 31 on the end surfaces of the bracket 30 may be regarded as a limiting structure. During assembly, multiple cells 20 may be mounted onto the bracket 30 according to the preceding limiting structure. In some examples, the bracket 30 may be assembled by fitting the upper and lower brackets (the upper bracket 30a, the sleeve 30c, and the lower bracket 30b). The cylindrical battery is used as an example. Multiple components of the bracket 30 may be assembled along the axial direction of the plurality of cells 20. During assembly, the multiple cells 20 may be mounted inside the bracket 30 to be assembled, and after the arrangement of the plurality of cells 20 is completed, the bracket 30 is assembled by fitting the components.

After the plurality of cells 20 of the cell module 100a are mounted onto the end surfaces of the bracket 30, the electrodes 21 of the plurality of cells 20 that need to be electrically connected are welded through the connection pieces 70 according to the series-parallel relationship between the plurality of cells 20. The electrodes 21 of the plurality of cells 20 that can be electrically connected by the same connection piece 70 include positive electrodes 21 connected in parallel, negative electrodes 21 connected in parallel, and positive and negative electrodes 21 connected in series. The electrodes 21 of the multiple cells 20 electrically connected by the same connection piece 70 have the same potential. The electrodes 21 of the plurality of cells 20 are exposed through one or more openings 31 on the end surfaces of the bracket 30. The connection piece 70 may be welded to the multiple electrodes 21 through the multiple openings 31, and the electrodes 21 of the multiple cells 20 to be electrically connected are each spot-welded to the connection piece 70. In some examples, the connection piece 70 and the electrodes 21 of the plurality of cells 20 are welded by laser beam welding. In some examples, at the positions which are on the end surface of the bracket 30 covered by the connection piece 70 when the connection piece 70 is welded to the electrodes 21 through the multiple openings 31 and which are not the positions of the openings 31, the connection piece 70 and the bracket 30 may be fixed by bolts, nuts, and the like.

After the plurality of cells 20 are mounted onto the bracket 30, welded to the connection pieces 70, and electrically connected, the surface of the connection pieces 70 and the electrodes 21 of the plurality of cells 20 may be coated with the sealant, and then the end cover 40 is mounted onto the end surface of the bracket 30. The end cover 40 presses down the end surface of the bracket 30 coated with the sealant so that the sealant can effectively cover the target component after being pressed and further fill the water seepage gap, thereby significantly improving the waterproof capability of the battery pack 100. From the outside to the inside, under the pressure of the end cover 40, the sealant covers the connection pieces 70, the welding points between the connection pieces 70 and the electrodes 21, and the electrodes 21 of the plurality of cells 20 in sequence. Moreover, the sealant can fill the openings 31 on the end surface of the bracket 30, and the gap between the bracket 30 and the electrodes 21 of the plurality of cells 20, the gap between the bracket 30 and the side part of the plurality of cells 20, and other water seepage spaces can be filled with the sealant. After pressed, the end cover 40 is fixed to the end surface of the bracket 30 through fasteners such as bolts.

In some examples, based on the above, the separators 50 are formed on the end cover 40 and/or the end surface of the bracket 30, and the sealant covering the connection pieces 70 and the electrodes 21 of the plurality of cells 20 may be separated by the separators 50 into several different regions 51 divided by the separators 50 during the process of mounting the end cover 40 onto the end surface of the bracket 30, thereby increasing the creepage distance in the battery pack 100 and improving the waterproof performance.

In some examples, based on the above, the portions on the end cover 40 corresponding to the positions of the electrodes 21 of the plurality of cells 20 are adjusted and designed such that after the end cover 40 is mounted onto the end surface of the bracket 30, the sealant pressed and squeezed by the end cover 40 is filled between the end cover 40 and the openings 31 on the end surface of the bracket 30. The thickness of the sealant on different electrodes 21 is adjusted through assembly operations, and the distances between the electrodes 21 of the plurality of cells 20 and the end cover 40 are different so that the thermal runaway airflow and flame can have a pressure relief breakthrough point. In some examples, the sunken boss 41 is provided on the portion of the end cover 40 corresponding to the position of the first-type electrode 21a such as the positive electrode 21 of the cell 20, or the material thickness on this portion is reduced so that the shortest distance between the first-type electrode 21a and the end cover 40 is less than the shortest distance between the electrode 21 (the second-type electrode 21b) of another cell 20 and the end cover 40, and the sealant filled between the end cover 40 and the first-type electrode 21a is thinner. In this manner, when thermal runaway occurs in the battery pack 100, the airflow and flame can break through the preceding portion of the end cover 40 and be discharged, thereby preventing an explosion.

In the preceding multiple examples involving the end cover, the bracket, and the sealant therebetween, the waterproof design near the electrodes of the plurality of cells in the battery pack is optimized. The installation result of the end cover onto the bracket and the squeezing action during the assembly process ensure that the sealant covers the electrodes of the plurality of cells exposed by the openings and further fills the gaps between the bracket and the electrode end surface and between the bracket and the cell side surface. The separators further increase the creepage distance in the battery pack. The adjustment of the structure and thickness of the end cover further improves the pressure relief function of the battery pack in this design. In the preceding examples, the increasingly stringent safety requirements of the battery pack for the power tool can be satisfied, and the battery pack can adapt to the working conditions where some power tools are exposed to water and humidity.

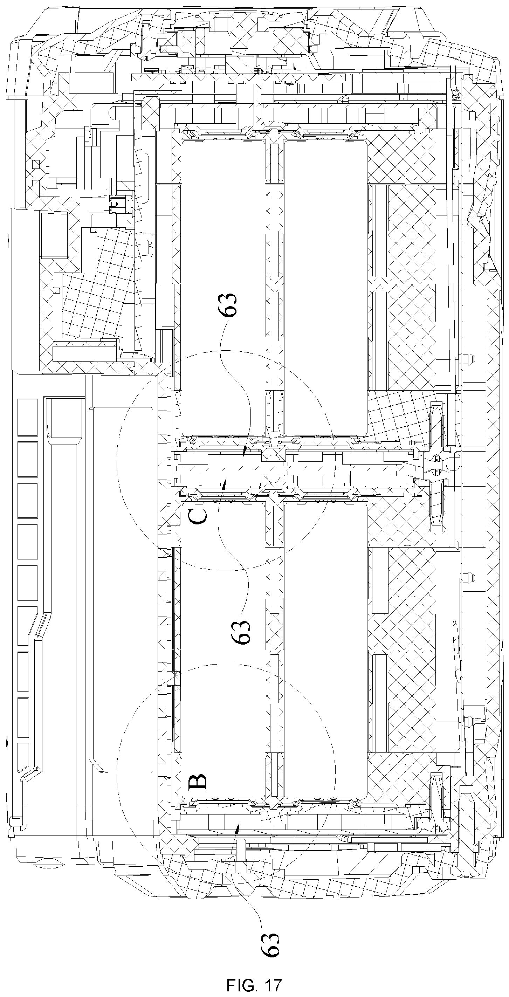

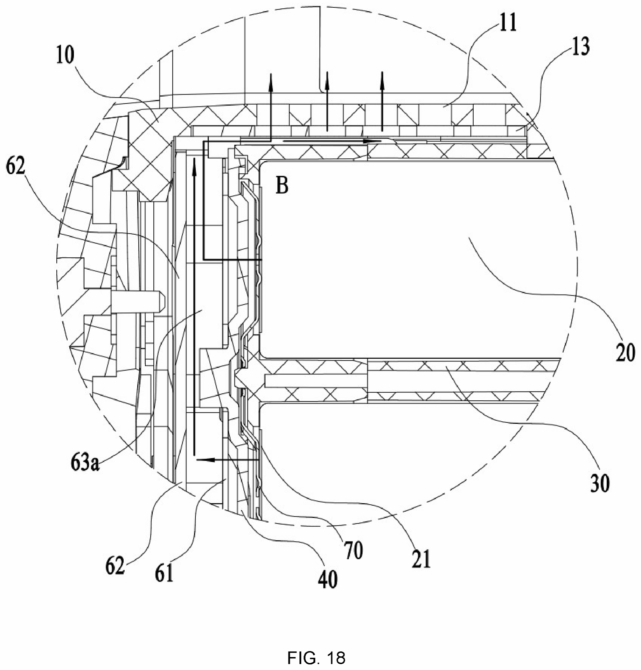

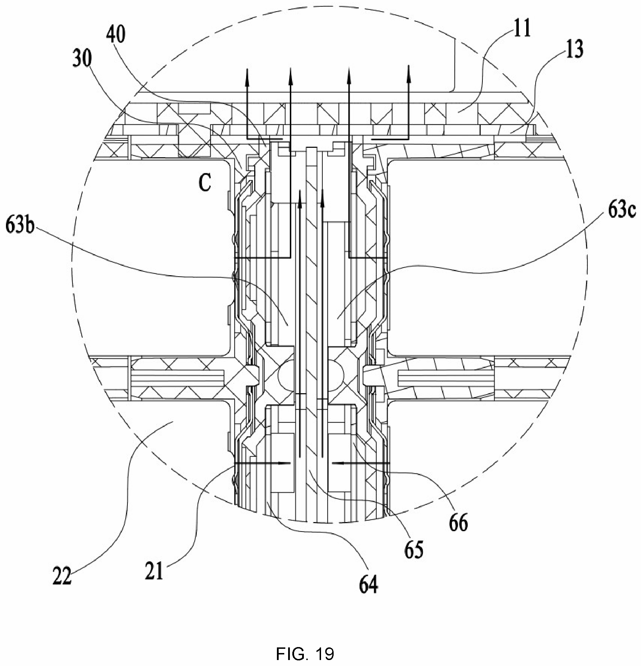

The present invention further provides another example in which the thermal runaway pressure relief capability of the battery pack 100 is improved. The battery pack 100 includes the housing 10 that forms the body of the battery pack 100. The internal accommodation space formed by the housing 10 accommodates the plurality of cells 20 and the bracket 30 supporting the plurality of cells 20. In addition, referring to FIGS. 17 to 19, the battery pack 100 further includes at least a first metal plate 61 and a second metal plate 62 that are accommodated in the housing 10 of the battery pack 100. The first metal plate 61 is disposed in a plane substantially perpendicular to the central axis of the cell 20, and the second metal plate 62 is disposed in a plane substantially parallel to the plane where the first metal plate 61 is located. In other words, the first metal plate 61 and the second metal plate 62 are parallel to each other and perpendicular to the central axis of the cell 20. Moreover, the first metal plate 61 has openings 31, and the positions of the openings 31 may correspond to the electrodes 21 of the plurality of cells 20 so that the airflow ejected from the electrodes 21 can pass through the openings 31 when the thermal runaway of the plurality of cells 20 occurs. The first metal plate 61 and the second metal plate 62 arranged in parallel are located on the same side of the plurality of cells 20 in the axial direction of the plurality of cells 20 and mate with the openings 31 to form an exhaust channel 63 next to the electrodes 21 of the plurality of cells 20. The airflow entering from the openings 31 of the first metal plate 61 passes through the inter-plate exhaust channel 63 under the guidance and restriction of the first metal plate 61 and the second metal plate 62 and is finally discharged out of the housing 10 of the battery pack 100, thereby implementing the function of pressure relief and explosion prevention.

Specifically, the multiple cells 20 in the battery pack 100 are placed in parallel together and supported by the same bracket 30. Multiple openings 31 may be disposed on the first metal plate 61, and the positions of the multiple openings 31 are in one-to-one correspondence with the positions of the electrodes 21 of the multiple cells 20. That is, when thermal runaway occurs, the airflow ejected from the electrode 21 of each cell 20 can pass through the opening 31 closest to the position of the electrode 21, thereby providing a better guiding effect. The cylindrical battery is used as an example. The multiple cells 20 may be parallel to each other and arranged together, the electrodes 21 of the multiple cells 20 are substantially located in the same plane, the first metal plate 61 and the second metal plate 62 may be substantially parallel to the plane where the electrodes 21 of the plurality of cells 20 are located, the openings 31 on the first metal plate 61 may be provided one by one toward the positions of the respective electrodes 21, and the shapes of the openings 31 on the first metal plate 61 may be regular shapes such as circles or may be irregular. In some examples, the openings 31 on the first metal plate 61 may be in one-to-many correspondence with the electrodes 21 of the plurality of cells 20.

In some examples, the first metal plate 61 and/or the second metal plate 62 are made of an alloy material, including, but not limited to, an aluminum alloy material. The metal plate material should have good fireproof and heat dissipation performance. The material used for the first metal plate 61 and the second metal plate 62 may be the same or different. In some examples, the first metal plate 61 and/or the second metal plate 62 are mixed with other materials capable of improving the fireproof performance in addition to the alloy materials.

The housing 10 of the battery pack 100 is generally provided with an airflow outlet 11 for heat dissipation. Under normal circumstances, the airflow outlet 11 can achieve the air cooling or natural heat dissipation of the battery pack 100. When thermal runaway occurs, the relevant airflow and flame reach the airflow outlet 11 or part of the airflow outlet 11 under the guidance of the exhaust channel 63 between the first metal plate 61 and the second metal plate 62. In accordance with claim 1, to avoid damage to the housing 10, strengthen the strength of the relevant structure, and ensure the smooth discharge of the thermal runaway airflow and flame, as shown in FIGS. 17 to 19, the airflow outlet 11 that is connected to the exhaust channel 63 between the first metal plate 61 and the second metal plate 62 is provided with a fireproof part 13. The fireproof part 13 is made of a material different from the material of the housing 10 and should have good fireproof and heat dissipation performance. Specifically, the housing 10 may be mainly made of engineering plastics, and the fireproof part 13 is made of metal materials such as the aluminum alloy. In some examples, the fireproof part 13 disposed at the airflow outlet 11 may be a metal plate or a metal mesh having openings whose positions correspond to the airflow outlet 11.

In some examples, in addition to the first metal plate 61 and the second metal plate 62, a greater number of metal plates may be provided in the battery pack 100, where a pair of metal plates may form one exhaust channel 63. Multiple cells 20 placed in parallel together in the battery pack 100 may form one cell module 100a. The cylindrical battery in which the electrodes 21 of the plurality of cells 20 are located at two ends of the plurality of cells 20 along the axial direction is used as an example. One cell module 100a may include multiple cells 20 arranged in parallel, and the electrodes 21 of the multiple cells 20 are located on two sides of the cell module 100a, respectively. The first metal plate 61 and the second metal plate 62 may be disposed on one side of the cell module 100a so that the airflow and flame when the thermal runaway of the electrodes 21 of the plurality of cells 20 on one side occurs can be discharged from the housing 10 through an exhaust channel 63a. Further, a third metal plate 64 and a fourth metal plate 65 may be disposed on the other side of the cell module 100a to form another exhaust channel 63b on the other side of the plurality of cells 20 so that the airflow and flame when the thermal runaway of the electrodes 21 of the plurality of cells 20 on the other side occurs can be discharged. In the case where the battery pack 100 includes more than one cell module 100a, each cell module 100a may be provided with the paired metal plates. One battery module 100a may be provided with zero, two, or four metal plates to form one or two exhaust channels 63. In some examples, two cell modules 100a may share one metal plate to form respective exhaust channels 63 in the case where the electrodes 21 of the plurality of cells 20 of the two cell modules 100a are placed opposite to each other. Specifically, the electrodes 21 (the positive and negative electrodes 21) of the plurality of cells 20 are located on the left and right sides of the cell module 100a, respectively, the right electrodes 21 of one cell module 100a are adjacent to the left electrodes 21 of the other cell module 100a, the exhaust channel 63b for the right electrodes 21 is formed by the third metal plate 64 and the fourth metal plate 65, and the adjacent exhaust channel 63a for the left electrodes 21 of the other cell module 100a may be formed by the fourth metal plate 65 and a fifth metal plate 66, and the two cell modules 100a share the fourth metal plate. For the relevant features of other metal plates, reference may be made to the description of the examples of the first metal plate 61 and the second metal plate 62. The details are not repeated here.

Based on the above, in some examples, to enhance the pressure relief and explosion prevention capability of the battery pack 100, the preceding sealant solution for the end cover 40 and the preceding metal plate solution may be combined and applied. The openings 31 exposing the electrodes 21 of the supported cells 20 are provided on the end surface of the bracket 30, the end cover 40 is mounted onto the end surface of the bracket 30, and the space between the end cover 40 and the end surface of the bracket 30 is filled with the sealant that can cover the electrodes 21 of the plurality of cells 20 exposed by the openings 31. In this manner, the battery pack 100 is optionally provided from the outside to the inside with: the housing 10 and the airflow outlet 11 thereon, the fireproof part 13 on the inner wall or outer wall of the housing 10 corresponding to at least part of the airflow outlet 11, the second metal plate 62, the first metal plate 61 and the openings 31 thereon corresponding to the electrodes 21 of the plurality of cells 20, the end cover 40 and the pressure relief design thereon corresponding to the electrodes 21 of the plurality of cells 20, the sealant, the connection piece 70, the bracket 30 and the openings 31 thereon corresponding to the electrodes 21 of the plurality of cells 20, and the plurality of cells 20 and the electrodes 21 thereof. In other words, when the thermal runaway of the plurality of cells 20 occurs, the airflow or flame ejected from the electrodes 21 passes through the openings 31 of the bracket 30, breaks through the sealant, breaks through the end cover 40 from pressure relief points (the sunken bosses 41 of the end cover 40 or the portions where the material thickness is reduced) that is easier to break through, reaches the first metal plate 61, passes through the openings 31 on the first metal plate 61, enters the exhaust channel 63 between the first metal plate 61 and the second metal plate 62, reaches the airflow outlet 11 of the housing 10 under the guidance of the channel, and finally, is discharged out of the housing 10 of the battery pack 100 through the airflow outlet 11 protected and supported by the fireproof part 13.

In some examples, the planes where the end cover 40, the first metal plate 61, and the second metal plate 62 are located are substantially parallel. Specifically, assuming that the plurality of cells in the cylindrical battery are arranged in parallel together, the electrodes 21 at two ends of the plurality of cells 20 are located on two planes, and the end cover 40, the first metal plate 61, and the second metal plate 62 may be substantially parallel to the plane where the electrodes 21 of the plurality of cells 20 on one side are located. In some examples, the positions of the openings 31 of the bracket 30, the positions of the sunken bosses 41 or portions 42 where the material thickness is reduced on the end cover 40, and the positions of the openings 31 on the first metal plate 61 correspond to each other, for example, overlap or at least partially overlap in the airflow injection direction of the plurality of cells 20 such as the axial direction of the plurality of cells 20. In some examples, as shown in FIG. 17, the first metal plate 61 is mounted onto the end cover 40, or the first metal plate 61 and the end cover 40 are designed as a two-in-one component. Specifically, the first metal plate 61 may be an insert of the plastic end cover 40 so that the end cover 40 with the metal plate having the openings 31 has waterproof and fireproof capabilities, and when thermal runaway occurs, the melted plastic does not adhere to the outer second metal plate 62, thereby avoiding interference with the exhaust channel 63.

In the preceding multiple examples involving metal plates and exhaust channels, the pressure relief, explosion prevention, fireproof, and flame-retardant capabilities of the battery pack are improved. The two metal plates on the same side of the electrodes of the plurality of cells guide the thermal runaway airflow to be discharged out of the battery pack through the openings on the plates and the channel between the plates. The flame-retardant and temperature-reducing properties of the metal plates keep the structures of the openings and channel reliable and not easily damaged and allow the effective heat dissipation of the airflow in the channel, thereby preventing the spread of fire. Moreover, in conjunction with the examples such as the example of the end cover, the waterproof performance is ensured. In this manner, the safety of the battery pack can be improved in many aspects.

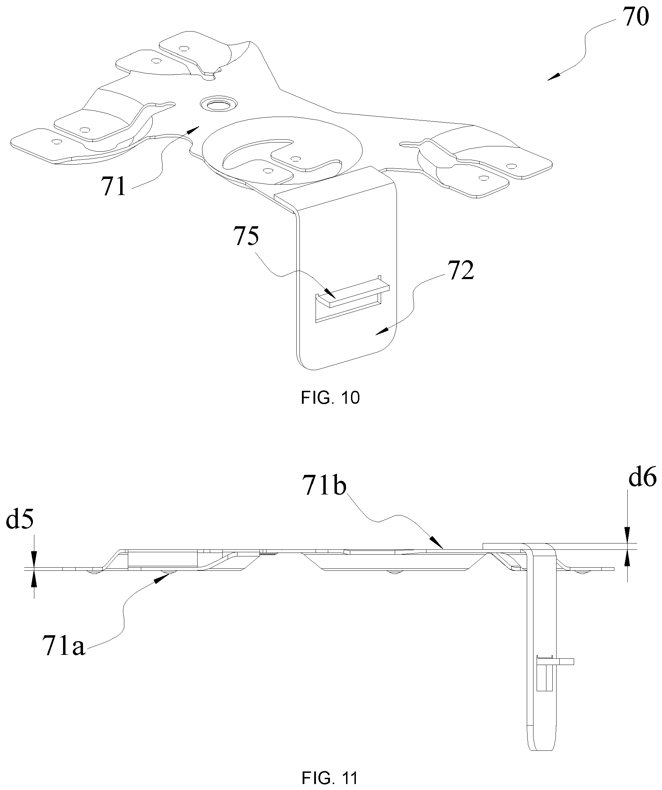

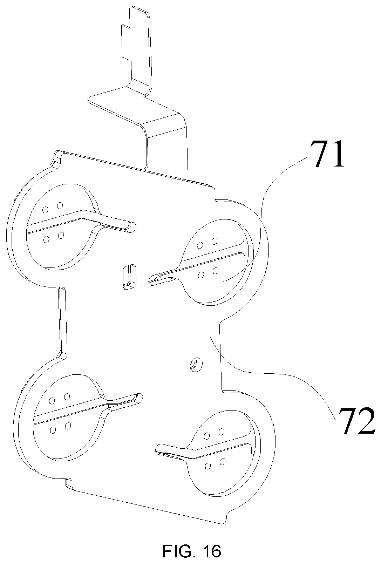

The present disclosure further provides an implementation method for improving the large current transmission and heat dissipation capabilities of the battery pack 100. The battery pack 100 includes the housing 10 that forms the body of the battery pack 100. The internal accommodation space formed by the housing 10 accommodates one or more cell modules 100a. The cell module 100a includes at least multiple cells 20 and the connection piece 70 electrically connected to the electrodes 21 of the multiple cells 20. In this example, referring to FIGS. 10 to 16, the connection piece 70 includes at least a first-layer component 71 and a second-layer component 72. The first-layer component 71 at least partially overlaps the second-layer component 72, the thickness d5 of the first-layer component 71 is less than 0.5 mm, and the thickness d6 of the second-layer component 72 is greater than or equal to the thickness d5 of the first-layer component 71.

Specifically, the plurality of cells 20 in the battery pack 100 are connected by the connection pieces 70, and the current is conducted by the connection pieces 70. As the expectations for the performance of the power tool 200, such as power, are raised, the overcurrent and temperature rise requirements for the connection pieces 70 of the battery pack 100 for the power tool 200 are also raised accordingly. Although increasing the cross-sectional area of the connection piece 70 through which the current passes can reduce the access resistance and improve the overcurrent and temperature rise capabilities, the limited space in the battery pack 100 and the layout of other components must also be considered. In addition, too thick a connection piece 70 makes it difficult to weld the connection piece 70 to the electrodes 21 of the plurality of cells 20. Therefore, the connection piece 70 may be designed to have a multi-layer component structure, and the thickness of each layer of components and an overlapping portion 72a of the multi-layer components may be limited. The first-layer component 71 can ensure basic current transmission, and the thickness of the first-layer component 71 is less than or equal to 0.5 mm, thereby facilitating the welding with the electrodes 21 of the plurality of cells 20. The second-layer component 72 may mate with the first-layer component 71 to enhance the overcurrent and temperature rise performance of the connection piece 70. The thickness of the second-layer component 72 is greater than or equal to the thickness of the first-layer component 71, and the second-layer component 72 covers at least a portion of the first-layer component 71. In some examples, the thickness of the first-layer component 71 is less than or equal to 2 mm, the thickness of the second-layer component 72 is greater than the thickness of the first-layer component 71, and the second-layer component 72 covers at least a portion of the first-layer component 71. Compared with the preceding example, the thickening of the first-layer component 71 may impose certain requirements on the welding process between the connection piece 70 and the electrodes 21. For example, laser beam welding or other manners may be required.

As shown in FIG. 11, the first-layer component 71 of the connection piece 70 has a first surface 71a and a second surface 71b, where the first surface 71a is in direct contact with the electrode 21 of the cell 20 to achieve electrical connection to the cell 20, and the second surface 71b is at least partially covered by the second-layer component 72. The thickness d5 of the first-layer component 71 is defined as the distance between the first surface 71a and the second surface 71b. The second-layer component 72 of the connection piece 70 has a third surface and a fourth surface, and the thickness d6 of the second-layer component 72 is defined as the distance between the third surface and the fourth surface. In some examples, the thicknesses of the first-layer component 71 and the second-layer component 72 are constant, the distance between the first surface 71a and the second surface 71b and the distance between the third surface and the fourth surface are both fixed values, and the distance between the third surface and the fourth surface is greater than or equal to the distance between the first surface 71a and the second surface 71b. In some other examples, the thickness of the first-layer component 71 is not constant and/or the thickness of the second-layer component 72 is not constant, the distance between the first surface 71a and the second surface 71b is not a fixed value, the distance between the third surface and the fourth surface is not a fixed value, and the maximum value of the distance between the third surface and the fourth surface is greater than or equal to the maximum value of the distance between the first surface 71a and the second surface 71b. In some examples, assuming that the third surface of the second-layer component 72 overlaps the second surface 71b of the first-layer component 71, and the surface area of the second surface 71b of the first-layer component may be greater than or equal to the surface area of the third surface of the second-layer component 72. It is to be understood that the surfaces or overlapping portion 72a of the multi-layer components and the thickness of each layer of components or the cross section through which the current flows are observed from two different perspectives. Assuming that an unfolded layer of components is regarded as a horizontally placed flat plate, the surfaces or overlapping portion may be observed from a top view or a bottom view, and the thickness or the cross section may be observed from other perspectives.

In some examples, the thickness d5 of the first-layer component 71 is less than or equal to 0.5 mm, and the thickness d6 of the second-layer component 72 is greater than d5 and greater than or equal to 0.5 mm. In an example, the thickness d5 of the first-layer component 71 is about 0.25 mm, and the thickness d6 of the second-layer component is about 0.5 mm. In an example, the thickness d5 of the first-layer component 71 is about 0.25 mm, and the thickness d6 of the second-layer component 72 is about 1 mm. In some examples, the thickness d5 of the first-layer component 71 is less than or equal to 2 mm, and the thickness d6 of the second-layer component 72 is greater than d5 and greater than or equal to 1 mm. Preferably, the thickness d6 of the second-layer component 72 is greater than or equal to 1.2 mm, greater than or equal to 1.5 mm, or greater than or equal to 2 mm.

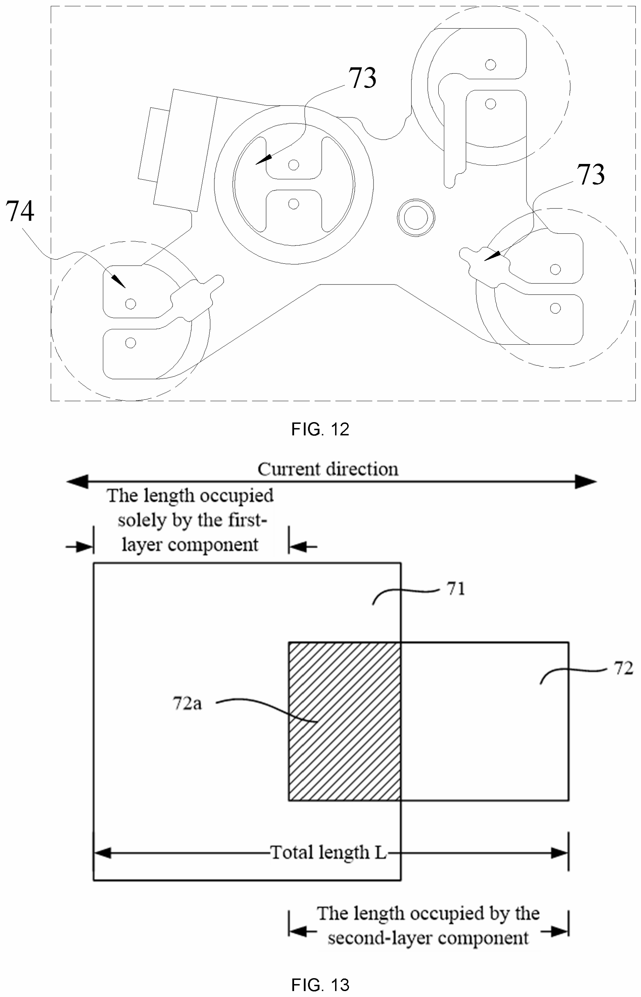

In some examples, along the direction of current in the connection piece 70, the proportion of the length occupied solely by the first-layer component 71 is less than or equal to the proportion of the length occupied by the second-layer component 72, and the length occupied by the second-layer component 72 includes the length occupied solely by the second-layer component 72 and the length occupied jointly by the first-layer component 71 and the second-layer component 72, that is, the length of the second-layer component 72 along the current direction. Referring to the resistance formula R ∞ ρ * I/A (ρ denotes the electrical resistivity of the material, I denotes the length, and A denotes the cross-sectional area) and FIGS. 26 and 27, by adjusting the proportion rather than increasing the total length of the connection piece 70, while the increase of the resistance of the connection piece 70 is avoided, most of the work of carrying the current in the connection piece 70 is undertaken by the second-layer component 72 with a thickened cross-section or jointly by the first-layer component 71 and the second-layer component 72, thereby effectively improving the overcurrent and temperature rise capabilities of the connection piece 70. Specifically, as shown in FIG. 13, the case where the first-layer component 71 and the second-layer component 72 that are rectangular in a top view are placed in the same direction and overlap is used as an example. Assuming that the current flows along the longitudinal direction of the rectangle, the length occupied by the second-layer component 72 is the longitudinal length of the second-layer component 72, the length occupied solely by the first-layer component 71 is the difference between the longitudinal length of the first-layer component 71 and the length of the overlapping portion 72a, and the latter is less than the former.

In some examples, the first-layer component 71 and the second-layer component 72 are connected by welding. Specifically, the first-layer component 71 and the second-layer component 72 may be connected by fusion welding such as laser beam welding or by pressure welding such as electric resistance welding. The overlapping portion 72a of the first-layer component 71 and the second-layer component 72 may achieve surface contact, that is, the second surface 71b of the first-layer component 71 is in contact with or partially in contact with the second-layer component 72. In some examples, the first-layer component 71 and the second-layer component 72 are made of the same material to facilitate welding therebetween. Specifically, the first-layer component 71 and the second-layer component 72 may both be made of a copper-nickel composite material. In some other examples, referring to FIGS. 26 and 27, the first-layer component 71 and the second-layer component 72 may be made of different materials, and the second-layer component 72 may use materials with higher thermal conductivity and/or electrical conductivity, thereby more significantly improving the performance of the connection piece 70. Specifically, the first-layer component 71 may be made of a copper-nickel composite material, while the second-layer component 72 may be made of red copper, that is, industrial pure copper, or further, the second-layer component 72 may be made of tin-plated red copper. In some examples, the first-layer component 71 and the second-layer component 72 are made of the same material and have different thicknesses, and the second-layer component 72 is thicker. In some examples, the first-layer component 71 and the second-layer component 72 are made of different materials and have the same or different thicknesses, and the second-layer component 72 has better thermal conductivity and/or electrical conductivity. In some examples, the first-layer component 71 and the second-layer component 72 are made of the same material and have the same thickness, and the first-layer component 71 and the second-layer component 72 may be formed by folding the same material.

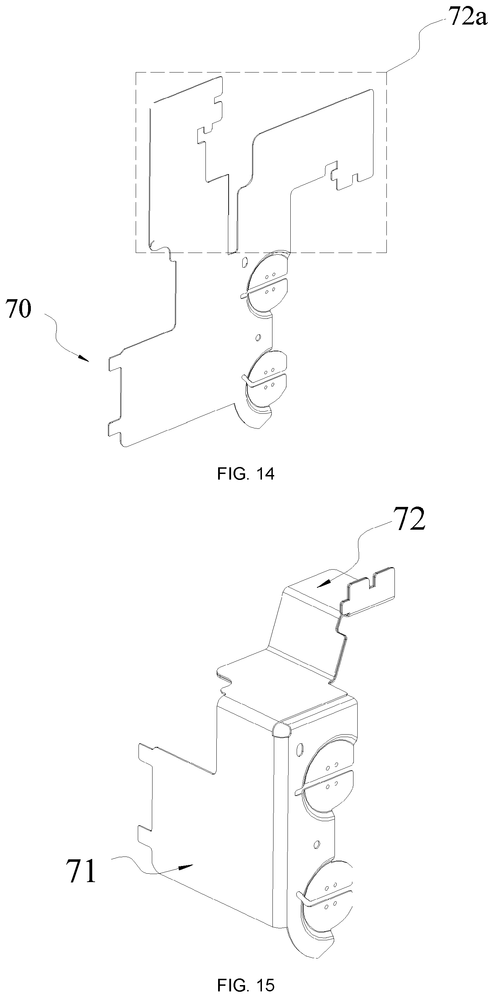

In some examples, as shown in FIGS. 14 and 15, the connection piece 70 is folded to form the first-layer component 71 and the second-layer component 72. That is, the first-layer component 71 and the second-layer component 72 are originally different parts of the same connection piece 70, and the first-layer component 71 and the second-layer component 72 are located in different layers after the connection piece 70 is folded. In this case, the first-layer component 71 and the second-layer component 72 can conduct current to each other before the connection piece 70 is folded, and the first-layer component 71 and the second-layer component 72 whose positions are changed after the connection piece 70 is folded may be welded for reinforcement. In this example, the first-layer component 71 and the second-layer component 72 are made of the same material and may have the same thickness so that the solution of the connection piece 70 is easier to implement in terms of the process.

In some examples, the connection piece 70 is disposed along the sidewall of the cell module 100a in the battery pack 100. Specifically, the multiple cells 20 of the cell module 100a may be assembled and supported together by the bracket 30 and form a whole in appearance. The outer wall of the bracket 30 may form part of the sidewall of the cell module 100a. The connection piece 70 may be disposed along or partially along the outer wall of the bracket 30. In the scenario where the connection piece 70 is folded, the connection piece 70 may wrap around the edge and/or corner of the bracket 30.

In some examples, as shown in FIG. 4 and FIGS. 17 to 19, the second-layer component 72 in the connection piece 70 or the overlapping portion 72a of the first-layer component 71 and the second-layer component 72 is disposed at the portion of the connection piece 70 where the currents of multiple cells are aggregated and/or the current transition portion between the cell modules. Specifically, assuming that the electrodes 21 of the multiple cells 20 are electrically connected through the same connection piece 70, in terms of the overall structure, the connection piece 70 includes a branch portion connected to the electrodes 21 of one or more cells 20 and a main circuit portion connected to the total positive terminal and the total negative terminal of the battery pack 100, and the overlapping portion 72a of the first-layer component 71 and the second-layer component 72 may be disposed on the main circuit of the connection piece 70. Alternatively, assuming that the battery pack 100 includes multiple cell modules 100a, some connection pieces 70 include portions for achieving the electrical connection between different cell modules 100a, and the overlapping portion 72a of the first-layer component 71 and the second-layer component 72 may be disposed at the portion where the connection piece 70 is connected to other cell modules 100a. In some examples, the overlapping portion 72a of the first-layer component 71 and the second-layer component 72 at least does not cover the electrode 21 of the cell 20. The preceding examples enable more targeted design optimization for the high current and high temperature rise parts of the connection piece 70, and the welding between the electrodes 21 and the connection piece 70/the first-layer component 71 and the second-layer component 72 is permitted by the relevant process.

Based on the above, in some examples, to comprehensively improve the safety of the battery pack 100, the preceding sealant solution and the preceding solution of the connection piece 70 may be combined and applied. The bracket 30 supporting the cell modules 100a or the plurality of cells 20 is provided in the housing 10 of the battery pack 100. The openings 31 exposing the electrodes 21 of the supported cells 20 are provided on the end surfaces of the bracket 30. Through the openings 31, the connection piece 70 may be electrically connected to the electrodes 21 of the plurality of cells 20 exposed by the openings 31. The openings 31 on the end surfaces of the bracket 30 are filled with the sealant. The sealant may cover the connection pieces 70 and the electrodes 21 of the plurality of cells 20 connected to the connection pieces 70. Further, the end cover 40 mounted onto the end surface of the bracket 30 is provided in the housing 10 of the battery pack 100. The sealant is filled between the end cover 40 and the end surface of the bracket 30. During the installation of the end cover 40, the sealant may evenly and effectively cover the connection pieces 70 and the electrodes 21 of the plurality of cells 20 connected to the connection pieces 70. In some examples, as shown in FIGS. 10 to 15, the connection piece 70 has openings 73, and the sealant fills the openings 31 on the end surface of the bracket 30 or further flows to the electrodes 21 of the plurality of cells 20 through the openings 73 of the connection pieces 70 due to gravity and extrusion pressure when the end cover 40 is mounted onto the end surface of the bracket 30 so that the coverage of the contacts between the connection pieces 70 and the electrodes 21 of the plurality of cells 20 and the coverage of the end surface of the electrodes 21 of the plurality of cells 20 can be achieved, thereby achieving sealing and waterproofing of the connection pieces 70 and the electrodes 21 of the plurality of cells 20. Specifically, the openings 73 on the connection piece 70 may include a groove in the middle of two welding points between the connection piece 70 and the electrode 21 and further include a hole near the welding points. On the one hand, the opening 73 is used for preventing the current from directly flowing between the welding points without passing through the cell; on the other hand, the opening 73 is used for helping the sealant cover the electrodes of the plurality of cells.

In some examples, as shown in FIG. 12, the proportion of the current ineffective area in the area of the end surface of the bracket 30 covered by the connection piece 70 is reduced as much as possible within an allowable range in the case where the electrical connection relationship remains unchanged, where the preceding current ineffective area is a portion of the connection piece 70 where very little electricity flows through the cross section since electrons tend to move in a low-resistance path. For example, the portion between the dashed lines and the solid lines in FIG. 12 that is not the connection piece 70 may be the current ineffective area. Specifically, as shown in FIG. 12, assuming that the connection piece 70 originally includes electrode connecting portions 74 corresponding to the positions of the electrodes 21 of the plurality of cells 20, the electrode connecting portions 74 may be circular, and using the preceding examples, the original connection piece 70 is partially cut in the direction in which the electrode connecting portion 74 has no other electrode connecting portions 74 to be connected.

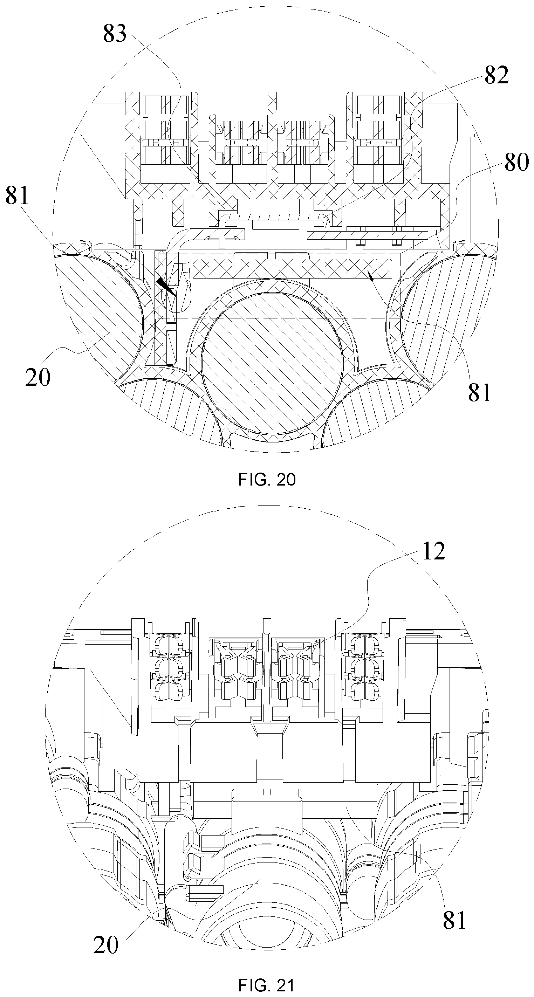

The present disclosure further provides technical solutions related to the battery pack fuse and cell voltage detection in the battery pack. The battery pack 100 is provided with a fuse 82 for achieving safety protection such as overcurrent protection. When the current exceeds the bearing capacity of the battery pack 100, the fuse 82 may melt to cut off the charging and discharging circuit of the battery pack 100. However, a large amount of thermal radiation is generated during operation, the space inside the battery pack 100 is narrow, and the heat generated by the fuse 82 may cause a safety hazard to the plurality of cells 20 adjacent to the fuse 82. In an optional example of the present invention, referring to FIGS. 20 and 21, a thermal insulation device 80 is provided between the fuse and the plurality of cells 20 adjacent to the fuse in the battery pack 100, and the thermal insulation device 80 can block or mitigate the thermal radiation and thermal baking of the plurality of cells 20 by the fuse 82. In some examples, the thermal insulation device 80 includes one or more thermal insulators 81, and the thermal insulator 81 may be formed by a fireproof layer made of mica sheets and a thermal insulation layer made of aerogels. It is to be understood that the material composition of the thermal insulator 81 may further include more options. In some examples, the fuse is arranged in an interface board assembly 83 of the battery pack 100 or the cell module 100a, the interface board assembly 83 may be fixed to the bracket 30 or the housing 10, and by means of snaps, bolts, screws, or the like, the thermal insulation device 80 may be fixed to the bracket 30 on the periphery of the plurality of cells 20 or the interface board assembly 83 where the fuse is located. In some examples, as shown in FIG. 20, similar to the case of the fuse 82, the thermal insulation device 80 may also be disposed between the main circuit wire or other electrical connectors electrically connected to the total positive and negative terminals of the battery pack 100 or the cell module 100a and the adjacent cells 20, or the thermal insulator 81 may be sleeved on the main circuit wire.

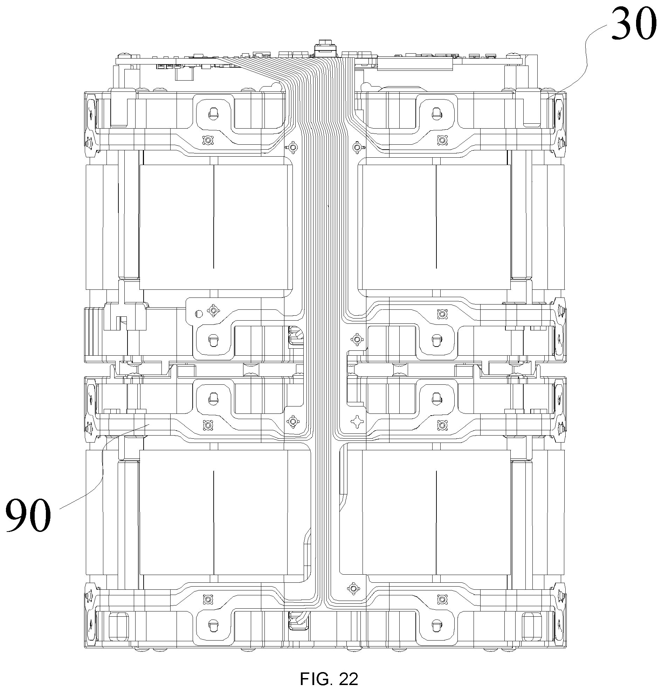

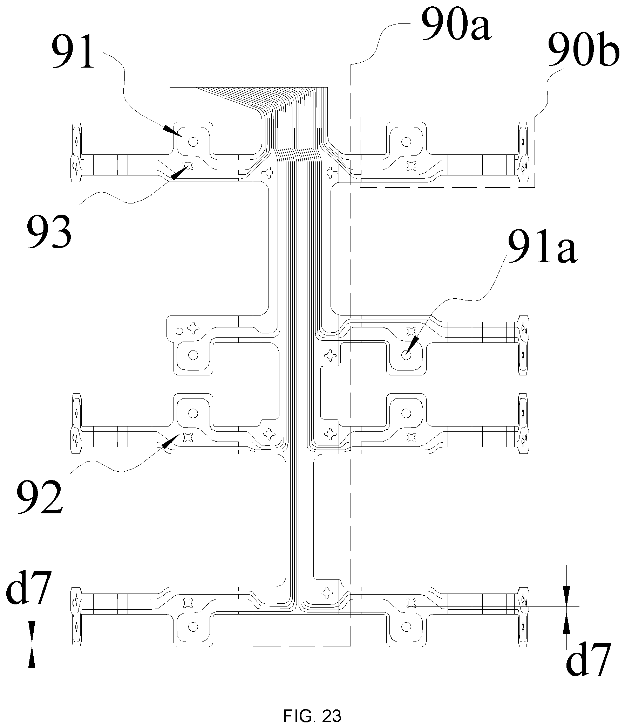

To ensure the safety of the battery pack 100, parameters such as the voltages of the plurality of cells in the pack may be monitored in real time to avoid risks such as overvoltage, overcurrent, and over-temperature. Currently, in an optional example, the voltage difference across the cell 20 is periodically acquired through a wire, and the arrangement of the wires in the pack may be designed according to the electrical connection relationship between the plurality of cells. For example, the wire may be led out from the connection piece 70 to acquire the cell terminal voltage. As the requirements for the performance of the battery pack 100 increase, there are more stringent requirements and higher expectations for the spatial arrangement within the battery pack 100. As the number of cells 20 increases, the preceding wire solution has problems such as difficult fixation, poor welding, messy wiring, and large space occupation. It is necessary to propose a cell voltage detection solution for the battery pack with stable and reliable electrical parameter transmission and a more compact and neat structure. Referring to FIGS. 22 to 25, the battery pack 100 further includes a flexible circuit board 90. The flexible circuit board 90 includes a substrate 92 and a conductive layer 91 such as copper wires and copper foil disposed in the insulating substrate and has the advantages of lightweight and small thickness. In the example of the present invention, a flexible die-cut circuit (FDC) board 90 may be used to collect the voltages of the multiple cells 20. The voltages may include the voltages of the multiple cells 20 in the same cell module 100a and may also include the voltages of the multiple cells 20 in different cell modules 100a. Specifically, the conductive layer 91 of the FDC board 90 may include multiple circuits (copper foil) based on the electrical connection relationship between the cell modules 100a and between the plurality of cells 20 in the battery pack 100, and the multiple electrically connected electrodes 21 have the same potential and may be connected to the same one of the preceding circuits.

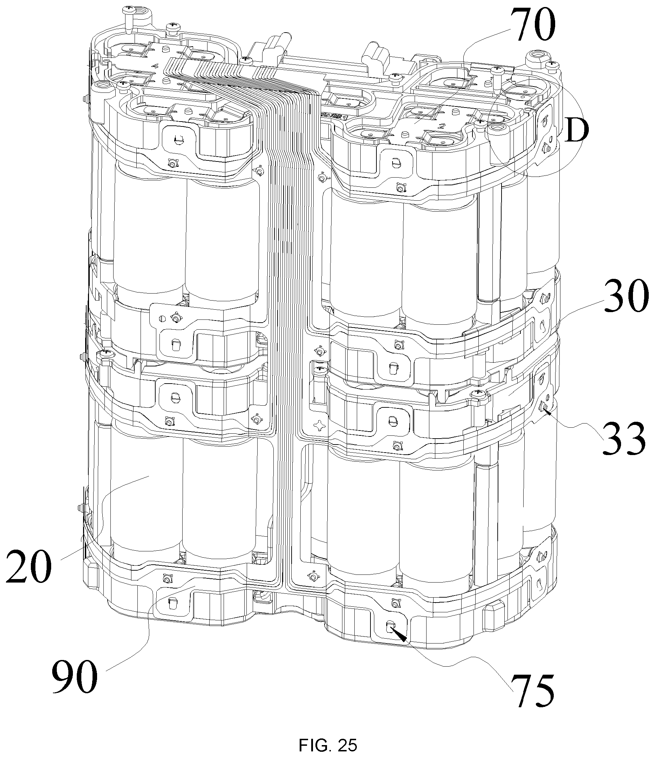

In some examples, the FDC board 90 may be disposed on an end surface shared by multiple cell modules 100a and may be fixedly mounted onto the bracket 30. For example, as shown in FIG. 25, assuming that two cell modules 100a are placed one above the other, and the FDC board 90 may be disposed on the front-side planes of the two cell modules 100a. The multiple cells 20 in the cell module 100a are arranged in parallel and extend up and down, and the electrodes 21 are located at two ends of the cell 20 along the axial direction, that is, the electrodes 21 are located at the upper and lower ends of the cell 20 along the axial direction. The connection pieces 70 may be disposed on the upper-side and lower-side planes of the cell module 100a. A portion of each connection piece 70 may extend toward the front-side plane of the cell module 100a, thereby providing welding points electrically connected to the circuits on the FDC board 90. The FDC board 90 may be provided with multiple X-shaped positioning holes 93, the bracket 30 may be provided with positioning columns 33 at corresponding positions, and the positioning holes 93 have an interference fit with the positioning columns 33 so that the flexible circuit board 90 can be fixed to the bracket 30.

In some examples, the FDC board 90 may include a main circuit portion 90a and branch circuit portions 90b. Based on the above, a circuit in the conductive layer 91 that is connected to the welding points of one connection piece to acquire the equipotential value of multiple electrodes 21 connected to each other on the connection piece 70 is a branch circuit; and the portion of the branch circuit before it converges with other branch circuits, along with the substrate 92 that covers and wraps only this pre-convergence section of the branch circuit, belongs to the branch circuit portion 90b of the FDC board 90, or the portion of the branch circuit before it converges with branch circuits that are not in this cell module 100a, along with the substrate 92 that covers and wraps only this pre-convergence section of the branch circuit, belongs to the branch circuit portion of the FDC board 90. The multiple branch circuits converge and then are connected to the total positive terminal and the total negative terminal of the battery pack 100. The portion of the multiple branch circuits after convergence, along with the substrate that covers and wraps the portion, belongs to the main circuit portion 90a of the FDC board. The design in which the main and branch circuits are distributed makes the wires on the FDC board clearer and neater, and wire intersections can be easily avoided. In some examples, in addition to being used for implementing battery pack voltage monitoring, the FDC board may also be used for implementing battery pack temperature monitoring. Similarly, the FDC board may include temperature measuring components adjacent to one or more cells 20, and the temperature measuring components transmit the relevant detection quantity outside the battery pack 100 through branch circuits on the board. For example, a negative temperature coefficient (NTC) element or the like may be provided near the welding points where the connection piece 70 extends and is connected to the branch circuits on the FDC board.

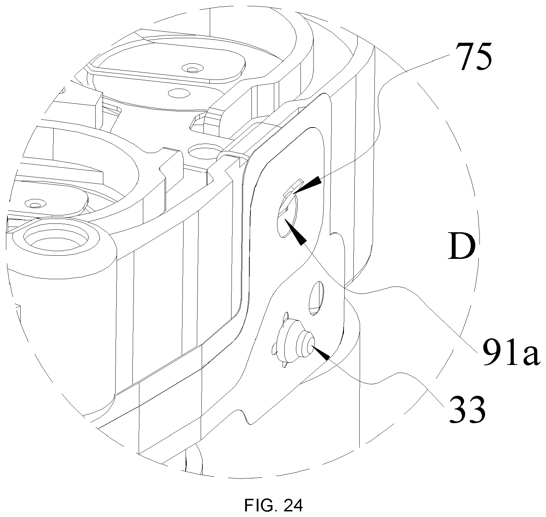

In some examples, as shown in FIGS. 24 and 25, to ensure the stable connection between the connection piece 70 and the flexible circuit board 90 and the reliable transmission of relevant parameters, a mounting portion 75 that protrudes from the surrounding plane at an oblique angle may be provided at the position where the connection piece 70 is to be connected to the flexible circuit board 90. For example, the mounting portion 75 may be a buckle formed by folding the connection piece 70 and can be embedded in a pad through hole at the end of the branch circuits of the flexible circuit board 90, thereby making it difficult for problems such as poor welding to occur between the connection piece 70 and the flexible circuit board 90 during welding. In some examples, the shortest distance between the edge of the conductive layer 91 and the edge of the substrate 92 or the edge of the positioning hole 93 in the flexible circuit board 90 is greater than or equal to 2 mm, that is, the substrate covering and wrapping the copper foil in the board extends at least 2 mm beyond the edge of the copper foil, thereby avoiding the following: the substrate is easily peeled off from the copper foil and other conductive layers, causing damage, water ingress, and other problems.

The effects of the present invention lie at least in the following: based on the characteristics of good structural strength and good fire resistance and heat dissipation of the metal plates, the metal plates are used to form the exhaust channels for the thermal runaway airflow and flame of the plurality of cells to be discharged, thereby effectively ensuring the pressure relief and explosion prevention safety of the battery pack; the end cover mates with the end surface of the bracket to form several regions where the sealant is separated so that the sealant can cover the electrodes of the plurality of cells region by region, thereby effectively increasing the creepage distance in the battery pack and significantly improving the waterproof and insulation performance of the battery pack; the second-layer component with an increased thickness and/or enhanced thermal conductivity/electrical conductivity are used to cover or partially cover the first-layer component of the connection piece, thereby improving the large current transmission and heat dissipation performance of the connection piece of the plurality of cells in the battery pack.

## Claims

1. A battery pack (100), comprising:
a housing (10);
a plurality of cylindrical cells (20) accommodated in the housing, wherein the plurality of cells comprises electrodes (21);
a bracket (30) accommodated in the housing and supporting the plurality of cells;
a first metal plate (61) accommodated in the housing, wherein the first metal plate is substantially perpendicular to the central axes of the cells, and the first metal plate has openings (31) through which airflow ejected from the electrodes passes; and
a second metal plate (62) accommodated in the housing, wherein the second metal plate is substantially parallel to the first metal plate, and the second metal plate and the first metal plate form an exhaust channel (63, 63a) for guiding the airflow to be discharged out of the housing;
wherein the housing has an airflow outlet, **characterized in that**
at least part of the airflow outlet is provided with a fireproof part (13) made of metal materials, and the fireproof part is made of a material different from a material of the housing.

2. The battery pack of claim 1, wherein the first metal plate has a plurality of openings in one-to-one correspondence with positions of the electrodes of the plurality of cells.

3. The battery pack of claim 1, wherein the fireproof part is a metal plate having openings whose positions correspond to the airflow outlet.

4. The battery pack of claim 1, wherein the first metal plate and/or the second metal plate are made of an aluminum alloy material.

5. The battery pack of claim 1, further comprising a third metal plate (64) and a fourth metal plate (65), wherein the third metal plate is substantially perpendicular to the central axis of the cell, and the third metal plate has openings through which airflow ejected from the electrodes passes; the fourth metal plate is substantially parallel to the third metal plate, and the third metal plate and the fourth metal plate form an exhaust channel for guiding the airflow to be discharged out of the housing; the exhaust channel formed by the third metal plate and the fourth metal plate and the exhaust channel formed by the first metal plate and the second metal plate are located on different sides of the cell.

6. The battery pack of claim 1, wherein the bracket has end surfaces corresponding to positions of the electrodes of the plurality of cells, an end surface of the end surfaces has openings exposing the electrodes, the battery pack further comprises end covers accommodated in the housing, an end cover of the end covers is mounted onto a respective end surface of the end surfaces of the bracket, and sealant is filled between the end cover and the end surface.

7. The battery pack of claim 6, wherein the first metal plate is mounted onto the end cover, and the first metal plate is substantially parallel to the end cover.

8. The battery pack of claim 7, wherein positions of the openings on the first metal plate correspond to positions of the openings on the end surface of the bracket.

9. The battery pack of claim 6, wherein the end cover comprises a flame retardant material.

10. The battery pack of claim 6, wherein the sealant covers a plurality of electrodes, the plurality of electrodes covered by the sealant comprise first-type electrodes and second-type electrodes, and a shortest distance between the first-type electrodes and the end cover is less than a shortest distance between the second-type electrodes and the end cover.

11. The battery pack of claim 6, wherein separators are formed on the end cover and/or the end surface, the sealant is separated into a plurality of regions divided by the separators, and the sealant covers the electrodes in the plurality of regions.

12. The battery pack of claim 11, wherein a plurality of electrodes in a same region of the plurality of regions are electrically connected via a connection piece (70), and the connection piece electrically connects the plurality of electrodes in the same region via the openings through which the electrodes are exposed on the end surface.

13. The battery pack of claim 12, wherein a separator (50) of the separators surrounds the connection piece.

14. The battery pack of claim 6, wherein the cell further comprises a cell body (22), and at least part of the cell body is not covered by the sealant.

## Patentansprüche

1. Akkupack (100), umfassend:
ein Gehäuse (10);
eine Mehrzahl von in dem Gehäuse aufgenommenen zylindrischen Zellen (20), wobei die Mehrzahl von Zellen Elektroden (21) umfasst;
eine in dem Gehäuse aufgenommene Halterung (30), welche die Mehrzahl von Zellen stützt;
eine in dem Gehäuse aufgenommene erste Metallplatte (61), wobei die erste Metallplatte im Wesentlichen senkrecht zu den Zentralachsen der Zellen ist, und die erste Metallplatte Öffnungen (31) aufweist, durch welche ein von den Elektroden ausgestoßener Luftstrom hindurchtritt; und
eine in dem Gehäuse aufgenommene zweite Metallplatte (62), wobei die zweite Metallplatte im Wesentlichen parallel zu der ersten Metallplatte ist, und die zweite Metallplatte und die erste Metallplatte einen Auslasskanal (63, 63a) zum Führen des Luftstroms bilden, damit dieser aus dem Gehäuse abgeführt wird; wobei das Gehäuse einen Luftstromauslass aufweist, **dadurch gekennzeichnet, dass**
zumindest ein Teil des Luftstromauslasses mit einem aus Metallmaterialien hergestellten feuerfesten Teil (13) versehen ist, und das feuerfeste Teil aus einem Material hergestellt ist, das sich von einem Material des Gehäuses unterscheidet.

2. Akkupack nach Anspruch 1, wobei die erste Metallplatte eine Mehrzahl von Öffnungen aufweist, deren Positionen den Positionen der Elektroden der Mehrzahl von Zellen eins zu eins entsprechen.

3. Akkupack nach Anspruch 1, wobei das feuerfeste Teil eine Metallplatte mit Öffnungen ist, deren Positionen dem Luftstromauslass entsprechen.

4. Akkupack nach Anspruch 1, wobei die erste Metallplatte und/oder die zweite Metallplatte aus einem Aluminiumlegierungsmaterial hergestellt sind.

5. Akkupack nach Anspruch 1, ferner umfassend eine dritte Metallplatte (64) und eine vierte Metallplatte (65), wobei die dritte Metallplatte im Wesentlichen senkrecht zu der Zentralachse der Zelle ist, und die dritte Metallplatte Öffnungen aufweist, durch welche ein von den Elektroden ausgestoßener Luftstrom hindurchtritt; die vierte Metallplatte im Wesentlichen parallel zu der dritten Metallplatte ist, und die dritte Metallplatte und die vierte Metallplatte einen Auslasskanal bilden, um den Luftstrom so zu führen, dass er aus dem Gehäuse abgeführt wird; der durch die dritte Metallplatte und die vierte Metallplatte gebildete Auslasskanal und der durch die erste Metallplatte und die zweite Metallplatte gebildete Auslasskanal an unterschiedlichen Seiten der Zelle angeordnet sind.

6. Akkupack nach Anspruch 1, wobei die Halterung Endflächen aufweist, die Positionen der Elektroden der Mehrzahl von Zellen entsprechen, eine Endfläche der Endflächen Öffnungen aufweist, die die Elektroden freilegen, der Akkupack ferner in dem Gehäuse aufgenommene Endabdeckungen umfasst, eine Endabdeckung der Endabdeckungen auf einer jeweiligen Endfläche der Endflächen der Halterung montiert ist, und ein Dichtmittel zwischen der Endabdeckung und der Endfläche eingefüllt ist.

7. Akkupack nach Anspruch 6, wobei die erste Metallplatte auf die Endabdeckung montiert ist, und die erste Metallplatte im Wesentlichen parallel zu der Endabdeckung ist.

8. Akkupack nach Anspruch 7, wobei Positionen der Öffnungen auf der ersten Metallplatte den Positionen der Öffnungen auf der Endfläche der Halterung entsprechen.

9. Akkupack nach Anspruch 6, wobei die Endabdeckung ein flammhemmendes Material umfasst.

10. Akkupack nach Anspruch 6, wobei das Dichtmittel eine Mehrzahl von Elektroden bedeckt, die Mehrzahl von durch das Dichtmittel bedeckten Elektroden Elektroden eines ersten Typs und Elektroden eines zweiten Typs umfasst, und ein kürzester Abstand zwischen den Elektroden des ersten Typs und der Endabdeckung kleiner ist als ein kürzester Abstand zwischen den Elektroden des zweiten Typs und der Endabdeckung.

11. Akkupack nach Anspruch 6, wobei auf der Endabdeckung und/oder der Endfläche Trennelemente ausgebildet sind, das Dichtmittel in eine Mehrzahl von durch die Trennelemente geteilten Bereichen getrennt ist, und das Dichtmittel die Elektroden in der Mehrzahl von Bereichen bedeckt.

12. Akkupack nach Anspruch 11, wobei eine Mehrzahl von Elektroden in demselben Bereich der Mehrzahl von Bereichen über ein Verbindungsteil (70) elektrisch verbunden sind, und das Verbindungsteil die Mehrzahl von Elektroden in demselben Bereich über die Öffnungen, durch die die Elektroden auf der Endfläche freigelegt sind, elektrisch verbindet.

13. Akkupack nach Anspruch 12, wobei ein Trennelement (50) der Trennelemente das Verbindungsteil umgibt.

14. Akkupack nach Anspruch 6, wobei die Zelle ferner einen Zellenkörper (22) umfasst, und zumindest ein Teil des Zellenkörpers nicht durch das Dichtmittel bedeckt ist.

## Revendications

1. Bloc-batterie (100), comprenant :
un boîtier (10) ;
une pluralité de cellules cylindriques (20) logées dans le boîtier, dans laquelle la pluralité de cellules comprend des électrodes (21) ;
un support (30) logé dans le boîtier et supportant la pluralité de cellules ;
une première plaque métallique (61) logée dans le boîtier, dans laquelle la première plaque métallique est sensiblement perpendiculaire aux axes centraux des cellules, et la première plaque métallique présente des ouvertures (31) à travers lesquelles passe un flux d'air éjecté depuis les électrodes ; et
une deuxième plaque métallique (62) logée dans le boîtier, dans laquelle la deuxième plaque métallique est sensiblement parallèle à la première plaque métallique, et la deuxième plaque métallique et la première plaque métallique forment un canal d'évacuation (63, 63a) pour guider le flux d'air à être évacué hors du boîtier ; dans lequel le boîtier présente une sortie de flux d'air, **caractérisé en ce que**
au moins une partie de la sortie de flux d'air est pourvue d'une partie ignifuge (13) faite de matériaux métalliques, et la partie ignifuge est faite d'un matériau différent d'un matériau du boîtier.

2. Bloc-batterie selon la revendication 1, dans lequel la première plaque métallique présente une pluralité d'ouvertures dont les positions correspondent une à une aux positions des électrodes de la pluralité de cellules.

3. Bloc-batterie selon la revendication 1, dans lequel la partie ignifuge est une plaque métallique ayant des ouvertures dont les positions correspondent à la sortie de flux d'air.

4. Bloc-batterie selon la revendication 1, dans lequel la première plaque métallique et/ou la deuxième plaque métallique sont faites d'un matériau d'alliage d'aluminium.

5. Bloc-batterie selon la revendication 1, comprenant en outre une troisième plaque métallique (64) et une quatrième plaque métallique (65), dans lequel la troisième plaque métallique est sensiblement perpendiculaire à l'axe central de la cellule, et la troisième plaque métallique présente des ouvertures à travers lesquelles passe un flux d'air éjecté depuis les électrodes ; la quatrième plaque métallique est sensiblement parallèle à la troisième plaque métallique, et la troisième plaque métallique et la quatrième plaque métallique forment un canal d'évacuation pour guider le flux d'air à être évacué hors du boîtier ; le canal d'évacuation formé par la troisième plaque métallique et la quatrième plaque métallique et le canal d'évacuation formé par la première plaque métallique et la deuxième plaque métallique étant situés sur des côtés différents de la cellule.

6. Bloc-batterie selon la revendication 1, dans lequel le support présente des surfaces d'extrémité correspondant à des positions des électrodes de la pluralité de cellules, une surface d'extrémité des surfaces d'extrémité présentant des ouvertures exposant les électrodes, le bloc-batterie comprenant en outre des couvercles d'extrémité logés dans le boîtier, un couvercle d'extrémité des couvercles d'extrémité étant monté sur une surface d'extrémité respective des surfaces d'extrémité du support, et un produit d'étanchéité étant rempli entre le couvercle d'extrémité et la surface d'extrémité.

7. Bloc-batterie selon la revendication 6, dans lequel la première plaque métallique est montée sur le couvercle d'extrémité, et la première plaque métallique est sensiblement parallèle au couvercle d'extrémité.

8. Bloc-batterie selon la revendication 7, dans lequel les positions des ouvertures sur la première plaque métallique correspondent aux positions des ouvertures sur la surface d'extrémité du support.

9. Bloc-batterie selon la revendication 6, dans lequel le couvercle d'extrémité comprend un matériau ignifuge.

10. Bloc-batterie selon la revendication 6, dans lequel le produit d'étanchéité recouvre une pluralité d'électrodes, la pluralité d'électrodes recouvertes par le produit d'étanchéité comprenant des électrodes d'un premier type et des électrodes d'un deuxième type, et une distance la plus courte entre les électrodes du premier type et le couvercle d'extrémité est inférieure à une distance la plus courte entre les électrodes du deuxième type et le couvercle d'extrémité.

11. Bloc-batterie selon la revendication 6, dans lequel des éléments de séparation sont formées sur le couvercle d'extrémité et/ou sur la surface d'extrémité, le produit d'étanchéité est séparé en une pluralité de régions divisées par les éléments de séparation, et le produit d'étanchéité recouvre les électrodes dans la pluralité de régions.

12. Bloc-batterie selon la revendication 11, dans lequel une pluralité d'électrodes dans une même région de la pluralité de régions sont électriquement connectées par l'intermédiaire d'une pièce de connexion (70), et la pièce de connexion connecte électriquement la pluralité d'électrodes dans la même région via les ouvertures à travers lesquelles les électrodes sont exposées sur la surface d'extrémité.

13. Bloc-batterie selon la revendication 12, dans lequel un élément de séparation (50) des éléments de séparation entoure la pièce de connexion.

14. Bloc-batterie selon la revendication 6, dans lequel la cellule comprend en outre un corps de cellule (22), et au moins une partie du corps de cellule n'est pas recouverte par le produit d'étanchéité.
